# EUROPEAN PATENT APPLICATION

(11) **EP 4 647 887 A1**
(43) Date of publication of application: **12.11.2025**
(21) Application number: 24747434.9
(22) Date of filing: 23.01.2024
(51) Int. Cl.: G06F 3/04842, G06F 3/0482, G06F 3/04845, G06T 3/40, G06T 7/11, G06F 3/0488

(54) **ELECTRONIC DEVICE FOR PROCESSING IMAGE AND METHOD FOR OPERATING SAME**

(30) Priority: 27.01.2023 KR 20230010932; 31.01.2023 KR 20230013210
(71) Applicant: Samsung Electronics Co., Ltd., Suwon-si, Gyeonggi-do 16677 (KR)
(72) Inventor: LEE, Chaekyung, Suwon-si Gyeonggi-do 16677 (KR); SHIN, Jongwoo, Suwon-si Gyeonggi-do 16677 (KR); LEE, Jihyun, Suwon-si Gyeonggi-do 16677 (KR); JEONG, Hojin, Suwon-si Gyeonggi-do 16677 (KR); KIM, Yuran, Suwon-si Gyeonggi-do 16677 (KR); KIM, Hyunjoo, Suwon-si Gyeonggi-do 16677 (KR); HEO, Seungeun, Suwon-si Gyeonggi-do 16677 (KR)
(74) Representative: Gulde & Partner
(86) International application number: PCT/KR2024/001085
(87) International publication number: WO 2024/158198

(57) **Abstract**

An electronic device according to one embodiment comprises: a memory that stores instructions; a display; and at least one processor, wherein the instructions, when executed by the at least one processor, may cause the electronic device to: display an image including at least one object on the display; confirm an input for a first object from among the at least one object through the display; on the basis of the input for the first object being confirmed, display a second object on an area where the input was confirmed in the image from a first time point when the input has been confirmed, wherein the second object is different from the at least one object included in the image; confirm whether the first object is an object separable from the image while the second object is displayed; on the basis of the first object being confirmed as a separable object, apply a visual effect to the image to distinguish the first object from the image; and display a menu for executing a plurality of functions for the first object on the display. Various other embodiments are possible.

## Description

### [Technical Field]

Various embodiments of the disclosure relate to an electronic device processing an image and a method for operating the same.

### [Background Art]

Recently, electronic devices including cameras have become widespread. A user may easily capture an image containing a subject using an electronic device at his desired time.

Further, the electronic device provides a function of editing an image captured using a camera, a function of transmitting the image to an external electronic device, and a function of storing the image in the electronic device.

For example, the function of editing the image may include at least one of a function for the electronic device to apply an emoji effect to the image, a function for the electronic device to reduce the size of the image, a function for the electronic device to make up on the face of a subject included in the image, or a function for the electronic device to correct the face of the subject included in the image.

### [Detailed Description of the Invention]

### [Technical Solution]

An electronic device according to an embodiment may comprise memory storing instructions, a display, and at least one processor.

In the electronic device according to an embodiment, the instructions may, when executed by the at least one processor, cause the electronic device to display an image including at least one object on the display.

In the electronic device according to an embodiment, the instructions may, when executed by the at least one processor, cause the electronic device to identify an input to a first object among the at least one object through the display.

In the electronic device according to an embodiment, the instructions may, when executed by the at least one processor, cause the electronic device to, based on identifying the input to the first object, display a second object on an area where the input is identified in the image from a first time when the input is identified.

In the electronic device according to an embodiment, the second object may be different from the at least one object included in the image.

In the electronic device according to an embodiment, the instructions may, when executed by the at least one processor, cause the electronic device to identify whether the first object is an object separable from the image while displaying the second object.

In the electronic device according to an embodiment, the instructions may, when executed by the at least one processor, cause the electronic device to apply a visual effect to the image so that the first object is distinguished from the image, based on identifying that the first object is a separable object.

In the electronic device according to an embodiment, the instructions may, when executed by the at least one processor, cause the electronic device to display a menu for executing a plurality of functions for the first object on the display.

A method for operating an electronic device according to an embodiment may comprise displaying an image including at least one object on a display included in the electronic device.

In the method for operating the electronic device according to an embodiment, an input to a first object among the at least one object may be identified through the display.

The method for operating the electronic device according to an embodiment may comprise, based on identifying the input to the first object, displaying a second object on an area where the input is identified in the image from a first time when the input is identified.

In the method for operating the electronic device according to an embodiment, the second object may be different from the at least one object included in the image.

The method for operating the electronic device according to an embodiment may comprise identifying whether the first object is an object separable from the image while displaying the second object.

The method for operating the electronic device according to an embodiment may comprise applying a visual effect to the image so that the first object is distinguished from the image, based on identifying that the first object is a separable object.

The method for operating the electronic device according to an embodiment may comprise displaying a menu for executing a plurality of functions for the first object on the display.

A non-transitory recording medium according to an embodiment may store at least one instruction capable of executing displaying an image including at least one object on a display included in an electronic device.

The non-transitory recording medium according to an embodiment may store at least one instruction capable of executing identifying an input to a first object among the at least one object through the display.

The non-transitory recording medium according to an embodiment may store at least one instruction capable of executing, based on identifying the input to the first object, displaying a second object on an area where the input is identified in the image from a first time when the input is identified.

In the non-transitory recording medium according to an embodiment, the second object may be different from the at least one object included in the image.

The non-transitory recording medium according to an embodiment may store at least one instruction capable of executing identifying whether the first object is an object separable from the image while displaying the second object.

The non-transitory recording medium according to an embodiment may store at least one instruction capable of executing applying a visual effect to the image so that the first object is distinguished from the image, based on identifying that the first object is a separable object.

The non-transitory recording medium according to an embodiment may store at least one instruction capable of executing displaying a menu for executing a plurality of functions for the first object on the display.

### [Brief Description of Drawings]

FIG. 1 is a view illustrating an electronic device in a network environment according to an embodiment.
FIG. 2A is a view illustrating a process for an electronic device to separate a separable object from an image according to an embodiment.
FIG. 2B is a block diagram schematically illustrating an electronic device according to an embodiment.
FIG. 3A is a flowchart illustrating an operation for an electronic device to separate at least one object included in an image according to an embodiment.
FIG. 3B is a flowchart illustrating an operation for an electronic device to display a plurality of second objects on an area where a user's input is identified according to an embodiment.
FIG. 3C is a flowchart illustrating an operation for an electronic device to enlarge and display an area where an input to a first object is identified according to a preset ratio according to an embodiment.
FIG. 3D is a flowchart illustrating an operation for an electronic device to separate at least one object included in an image according to an embodiment.
FIG. 4 is a flowchart illustrating an operation for an electronic device to display a second object until a time when a first object is identified as a separable object according to an embodiment.
FIG. 5A is a view illustrating an operation for an electronic device to display a second object on an area where a user's input is identified according to an embodiment.
FIG. 5B is a view illustrating an operation for an electronic device to display a second object on an area where a user's input is identified according to an embodiment.
FIG. 5C is a view illustrating an operation for an electronic device to adjust the transparency of a second object according to an embodiment.
FIG. 5D is a view illustrating an operation for an electronic device to display a second object including a plurality of outlines according to an embodiment.
FIG. 5E is a view illustrating an operation for an electronic device to apply a plurality of colors to a second object according to an embodiment.
FIG. 5F is a view illustrating an operation for an electronic device to enlarge and display an area where an input to a first object is identified according to a preset ratio according to an embodiment.
FIG. 6A is a flowchart illustrating an operation for an electronic device to apply a visual effect to an area except for a first area corresponding to a first object after display of a second object is stopped according to an embodiment.
FIG. 6B is a view illustrating an operation for an electronic device to apply a visual effect to an area except for a first area corresponding to a first object after display of a second object is stopped according to an embodiment.
FIG. 6C is a view illustrating an operation for an electronic device to align and display a plurality of third objects outside a first object to apply a visual effect to a first area corresponding to the first object according to an embodiment.
FIG. 7A is a flowchart illustrating an operation for an electronic device to separate a plurality of objects included in an image according to an embodiment.
FIG. 7B is a view illustrating an operation for an electronic device to separate a first object and a third object from an image when a user input to a plurality of objects is identified according to an embodiment.
FIG. 8 is a view illustrating an operation for an electronic device to display a menu for displaying a plurality of functions for a first object according to an embodiment.
FIG. 9 is a flowchart illustrating an operation for an electronic device to determine whether to display an object for identifying information about an image depending on whether the image is deleted according to an embodiment.
FIG. 10A is a view illustrating an operation for an electronic device to display an object for displaying an image according to an embodiment.
FIG. 10B is a view illustrating an operation for an electronic device to display information about an image according to an embodiment.
FIG. 11A is a view illustrating an operation for an electronic device to display an object for displaying an image according to an embodiment.
FIG. 11B is a view illustrating an operation for an electronic device to display information about an image according to an embodiment.

### [Mode for Carrying out the Invention]

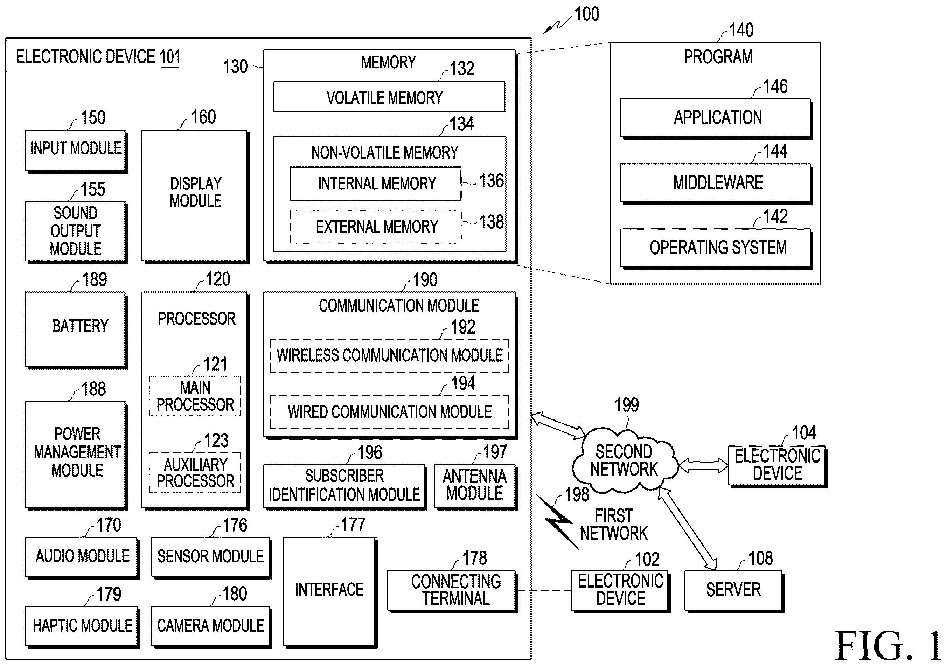

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

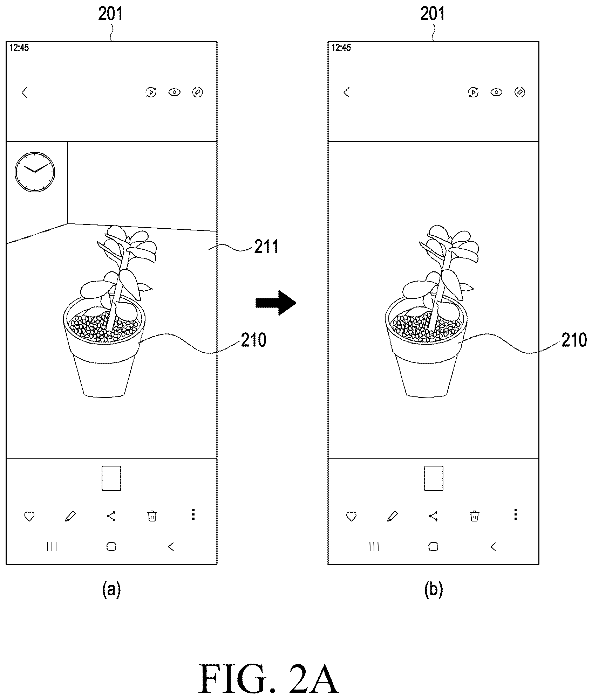

FIG. 2A is a view illustrating a process for an electronic device to separate a separable object from an image according to an embodiment.

Referring to FIG. 2A(a), according to an embodiment, the electronic device 201 (e.g., the electronic device 101 of FIG. 1) may display an image through a display. According to an embodiment, the display may include a touch sensor that senses a touch. For example, an image may include at least one object. For example, the image may include a first area corresponding to a first object 210 and an area 211 except for the first area.

According to an embodiment, the electronic device 201 may perform an operation of separating the first object 210 from the image displayed on the display based on a user input. According to an embodiment, the electronic device 201 may identify the user's input (e.g., a long press input or a tap-and-hold input) to the first object 210. According to an embodiment, the electronic device 201 may identify whether the first object 210 is an object separable from the image.

Referring to FIG. 2A(b), according to an embodiment, if the first object 210 is identified as a separable object, the electronic device 201 may identify (or extract) a first area corresponding to the first object 210 in the image. For example, the first area may mean an area where the first object 210 is displayed in the image.

According to an embodiment, the electronic device 201 may display a menu for executing a plurality of functions for the first image corresponding to the first object 210 after identifying the first area corresponding to the first object 210 in the image. For example, the plurality of functions may include at least one of a function of storing the first image (e.g., storing the first image as a separate image file), a function of transmitting (or sharing) the first image to an external electronic device, a function of editing the first image, and/or a function of copying the first image to a clipboard.

According to an embodiment, the electronic device 201 may perform a corresponding function based on a user input (e.g., tab input) to a menu.

Accordingly, the electronic device 201 may easily store or share only an image corresponding to a specific object in an image displayed on the display.

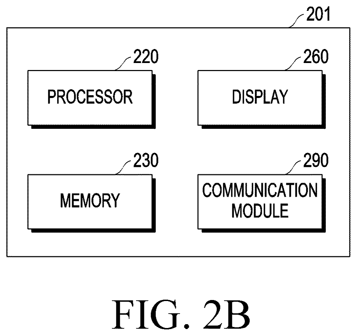

FIG. 2B is a block diagram schematically illustrating an electronic device according to an embodiment.

Referring to FIG. 2B, according to an embodiment, the electronic device 201 (e.g., the electronic device 101 of FIG. 1) may include memory 230 (e.g., the memory 130 of FIG. 1), a processor 220 (e.g., the processor 120 of FIG. 1), a display 260 (e.g., the display module 160 of FIG. 1) and a communication module 290 (e.g., the communication module 190 of FIG. 1).

According to an embodiment, the electronic device 201 may be implemented to be identical or similar to the electronic device 101 of FIG. 1.

According to an embodiment, the processor 220 may control the overall operation of the electronic device 201. For example, the processor 220 may be implemented to be the same as or similar to the processor 120 of FIG. 1.

According to an embodiment, the display 260 may include a touch sensor that senses a touch. According to an embodiment, the display 160 may be implemented to be identical or similar to the display module 160 of FIG. 1.

According to an embodiment, the processor 220 may display an image including at least one object through the display 260. For example, at least one object may mean a subject or a background. For example, the image may include an image captured through the camera of the electronic device 201, an image stored in a website, or an image received from an external electronic device. However, the type of image is not limited thereto, and may include various images.

According to an embodiment, the processor 220 may identify an input to a first object among at least one object through the display 260. For example, the input may include at least one of a touch input, a long-press input, a tap-and-hold input, a tap input, or a drag-and-drop input. However, the type of input is not limited thereto, and may include various inputs.

According to an embodiment, the processor 220 may display a second object on the area where the input is identified in the image from a first time when the input to the first object is identified based on identifying the input (e.g., a long-press input or a tap-and-hold input) to the first object. According to an embodiment, the second object may be an object different from the first object. According to an embodiment, the processor 220 may display the second object on the display 260 based on identifying release of the input to the first object. Alternatively, even if the input to the first object is not released, the processor 220 may display the second object on the display 260 based on identifying the input to the first object.

For example, the second object may be implemented as various types of figures (e.g., circular figures). However, the shape or size of the figure is not limited thereto, and the second object may include figures having various shapes and sizes.

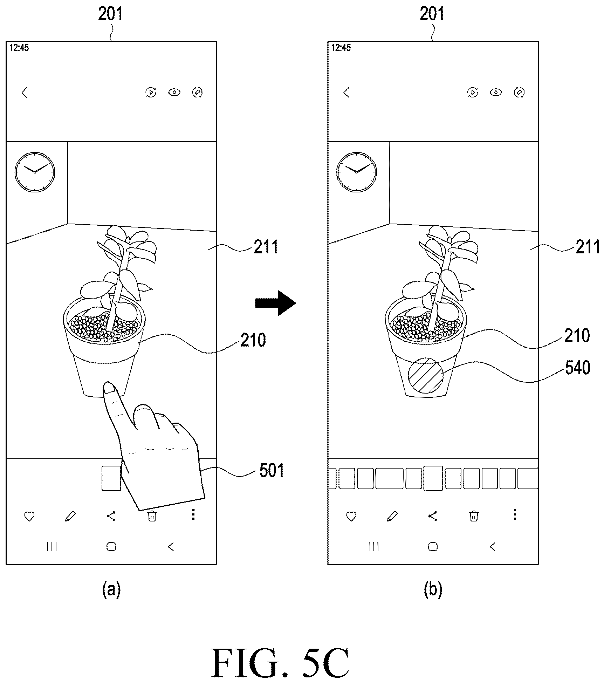

According to an embodiment, the processor 220 may adjust the transparency of the second object. According to an embodiment, the processor 220 may distinguish and display an area except for the area corresponding to the second object and the area corresponding to the second object. According to an embodiment, an operation of adjusting the transparency of the second object by the processor 220 is described in detail with reference to FIG. 5C.

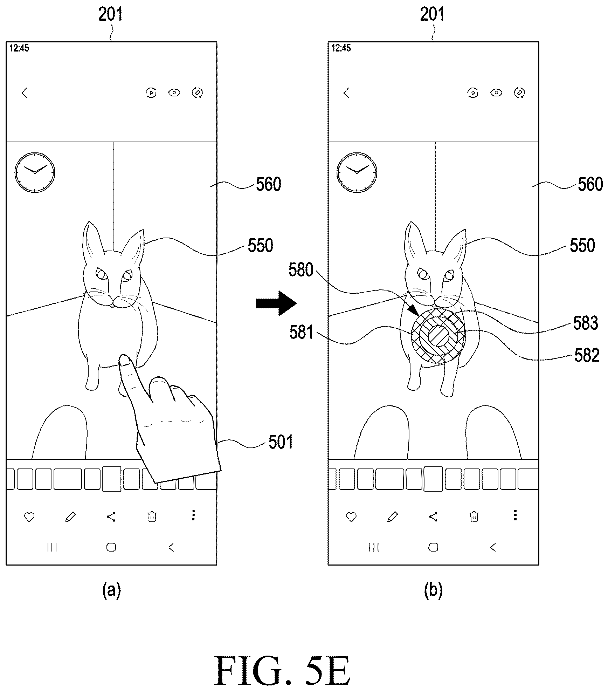

According to an embodiment, the processor 220 may determine a specific area around the area where the input to the first object is identified. The processor 220 may divide a specific area into a plurality of areas and display the second object by applying a plurality of colors to the inside of the plurality of divided areas. According to an embodiment, the processor 220 may determine the color of the second object based on the color extracted from the area where the input to the first object is identified. For example, the processor 220 may determine the second area and the third area around the area where the input to the first object is identified. The processor 220 may extract a first color among a plurality of colors included in the second area and extract a second color among a plurality of colors included in the third area. The processor 220 may apply the first color to the inside of the second area and apply the second color to the inside of the third area. According to an embodiment, the first color may be a color brighter than the second color, and the first color may be a color darker than the second color. According to an embodiment, an operation of applying a plurality of colors to the second object by the processor 220 is described in detail with reference to FIG. 5E.

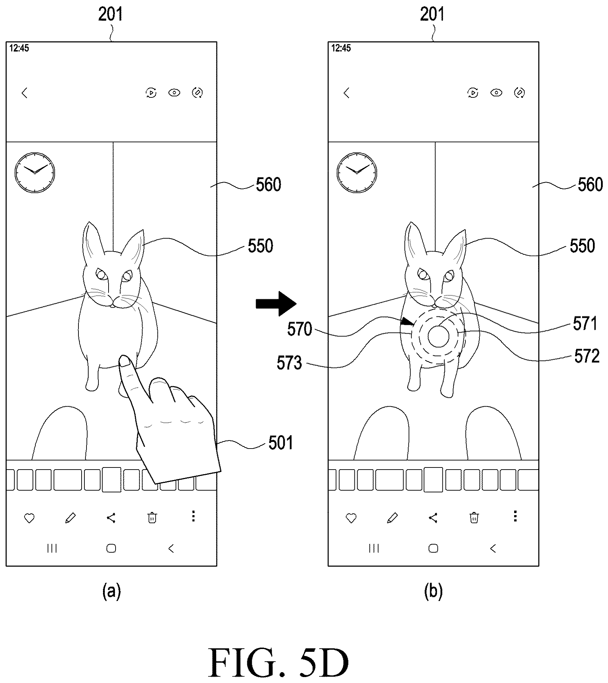

Further, according to an embodiment, the processor 220 may display a second object including a plurality of concentric circles around the area where the input to the first object is identified. Each of the plurality of concentric circles may include the same or different shapes of outlines. According to an embodiment, the processor 220 may determine the color of the outline of each of the concentric circles based on the color extracted from the area where the input to the first object is identified. However, the second object may be implemented as another type of figure that shares the center point in addition to the circle. For example, the processor 220 may determine a second area and a third area around the area where the input to the first object is identified. The processor 220 may extract a first color among a plurality of colors included in the second area and extract a second color among a plurality of colors included in the third area. The processor 220 may apply the first color to the outline of the second area and apply the second color to the outline of the third area. According to an embodiment, the first color may be a color brighter than the second color, and the first color may be a color darker than the second color. According to an embodiment, an operation of displaying the second object including a plurality of outlines by the processor 220 is described in detail with reference to FIG. 5D.

Further, according to an embodiment, the processor 220 may display a plurality of second objects on the area where the input to the first object is identified. According to an embodiment, the plurality of second objects may be objects different from the first object. According to an embodiment, colors of the plurality of second objects may be colors extracted from the image. For example, the plurality of second objects may be displayed at a random position on an area where an input is identified. According to an embodiment, colors of the plurality of second objects may be all different, some the same, or all the same. According to an embodiment, while the plurality of second objects are displayed, the processor 220 may identify whether the first object is an object separable from the image. According to an embodiment, the processor 220 may align and display the plurality of second objects along the outer periphery of the first area corresponding to the first object based on identifying the first object as a separable object.

Further, according to an embodiment, the processor 220 may enlarge and display the area where the input to the first object is identified at a preset ratio. According to an embodiment, the processor 220 may identify whether the first object is an object separable from the image while enlarging and displaying the area where the input to the first object is identified. According to an embodiment, the processor 220 may reduce the area where the input to the first object is identified to an original size.

According to an embodiment, while the second object is being displayed, the processor 220 may identify whether the first object is an object separable from the image.

According to an embodiment, the processor 220 may identify whether the first object is a separable object from the image through machine learning. According to an embodiment, the processor 220 may input the image to an artificial intelligence model to identify whether the first object is a separable object. According to an embodiment, the processor 220 may generate an artificial intelligence model by performing machine learning based on training data. According to an embodiment, machine learning may be performed through a separate server.

Further, the electronic device 201 may be implemented as an on-device artificial intelligence (AI) device. For example, technical features of the present invention may be applied to on-device artificial intelligence (AI) devices.

According to an embodiment, the processor 220 may display the second object from the first time when the input to the first object (e.g., a long-press input or a tap-and-hold input) is identified to the second time when the first object is identified as a separable object. According to an embodiment, the processor 220 may display the second object for at least a partial time period between the first time when the input to the first object (e.g., a long-press input or a tap-and-hold input) is identified and the second time when the first object is identified as a separable object. For example, the processor 220 may display the second object on the image from the first time when the input to the first object is identified to the second time when the first object is identified as a separable object, or for at least a partial time period between the first and second points. The processor 220 may display the second object on the image from the first time when the input to the first object is identified to the second time when a menu for executing a plurality of functions (e.g., a function of copying, sharing, or storing the first image) is displayed, or for at least a partial time period between the first time and the second time. The processor 220 may display the second object on the image from the first time when the input to the first object is identified to the second time when a message indicating whether the first object is separable is displayed, or for at least a partial time period between the first time and the second time.

According to an embodiment, if the first object is identified as a separable object, the processor 220 may identify (or extract) a first area corresponding to the first object from the image. According to an embodiment, the processor 220 may stop displaying the second object based on the first object being identified as a separable object (or the first object being identified as an inseparable object). According to an embodiment, if the first object is identified as a separable object, the processor 220 may display a message indicating that the first object is separable from the image.

Further, according to an embodiment, the processor 220 may identify whether the first object included in the image is separable from the image in a background state. According to an embodiment, if it is identified that the first object is separable in the background state, the processor 220 may identify (or extract) the first area. According to an embodiment, the processor 220 may not display the second object even when the user's input to the first object is identified. According to an embodiment, if it is identified that the first object is inseparable in the background state, the processor 220 may not identify (or extract) the first area. According to an embodiment, if the user's input to the first object is identified, the processor 220 may display information indicating that the first object is inseparable without displaying the second object.

According to an embodiment, the processor 220 may apply a visual effect to the image so that the first object is distinguished from the image based on identifying the first object as a separable object. According to an embodiment, the processor 220 may apply a visual effect to the identified first area or apply a visual effect to an area other than the first area. For example, the processor 220 may darkly display the area other than the first area. The processor 220 may apply a blur effect to the area other than the first area. The processor 220 may display the first area brighter than the first area.

According to an embodiment, the processor 220 may display a menu for executing a plurality of functions for the first object on the display 260. For example, the plurality of functions may include a function of storing, copying, or sharing the first image corresponding to the first object.

According to an embodiment, if the user's input (e.g., tab input) to the area other than the area corresponding to the menu for executing the plurality of functions is identified, the processor 220 may not display the menu for executing the plurality of functions. According to an embodiment, if the user's input (e.g., tab input) is identified, the processor 220 may display an image to which a visual effect is not applied.

According to an embodiment, if an input to the menu for storing the first image included in the menu is identified after the menu for executing the plurality of functions is displayed, the processor 220 may store the first image separated from the image in the memory 230. According to an embodiment, the processor 220 may include information about the image in the first image and store the first image in the memory 230. For example, when the image is stored on an Internet website, information about the image may include uniform resource locator (URL) information. According to an embodiment, the processor 220 may store information about the image as metadata for the first image.

According to an embodiment, if an input to the menu for copying the first image is identified, the processor 220 may copy the first image to the clipboard.

According to an embodiment, if an input to the menu for sharing the first image is identified, the processor 220 may transmit the first image to an external electronic device through the communication module 290.

According to an embodiment, the processor 220 may display the first image together with an object for identifying information about the image on the display 260. According to an embodiment, if an input to the object for identifying the information about the image is identified, the processor 220 may display uniform resource locator (URL) information on the display 260.

Further, according to an embodiment, the processor 220 may display an object for displaying an image (e.g., the original image of the first image). According to an embodiment, if an input to the object for displaying the image is identified, the processor 220 may display the image on the display 260.

According to an embodiment, if it is identified that the image has been deleted, the processor 220 may not display uniform resource locator (URL) information and/or the object for displaying the image.

According to an embodiment, the processor 220 may display a message indicating that the first object is inseparable on the display 260 based on identifying the first object as an inseparable object. According to an embodiment, when the processor 220 identifies (or extracts) the first area corresponding to the first object after a preset time, the processor 220 may display information indicating that the first object is an inseparable object on the display 260. For example, the preset time may be set by the user or the processor 220. According to an embodiment, when the processor 220 fails to identify (or extract) the first area corresponding to the first object, the processor 220 may display information indicating that the first object is an inseparable object on the display 260.

Operations of the electronic device 201 described in the following drawings may be performed by the processor 220. However, for convenience of description, operations performed by processor 220 are described as being performed by the electronic device 201.

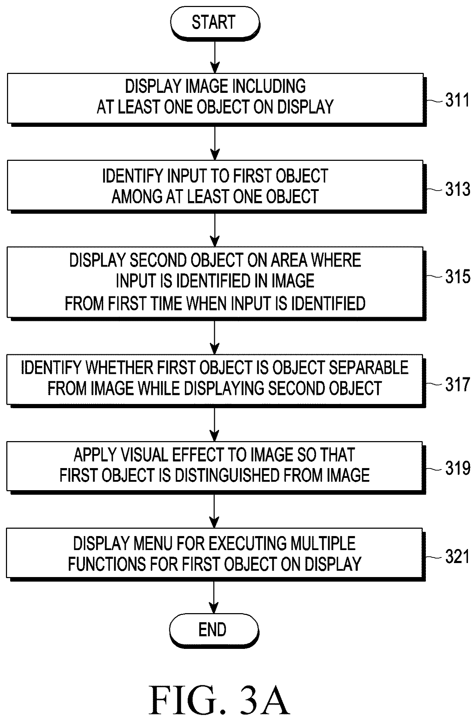

FIG. 3A is a flowchart illustrating an operation for an electronic device to separate at least one object included in an image according to an embodiment.

Referring to FIG. 3A, according to an embodiment, in operation 311, the electronic device 201 (e.g., the electronic device 201 of FIG. 2B) may display an image including at least one object on the display 260 (e.g., the display 260 of FIG. 2B). For example, the object may mean a subject or a background. For example, the image may include at least one of an image captured through the camera of the electronic device 201, an image stored in a website, or an image received from an external electronic device.

According to an embodiment, in operation 313, the electronic device 201 may identify an input to a first object among at least one object. For example, the input may include at least one of a touch input, a long-press input, a tap-and-hold input, a tap input, or a drag-and-drop input.

According to an embodiment, in operation 315, the electronic device 201 may display a second object on the area where the input is identified in the image from a first time when the input to the first object is identified. According to an embodiment, the second object may be an object different from the first object. According to an embodiment, the second object may be implemented as various types of figures (e.g., circular figures). However, the shape or size of the figure is not limited thereto, and the second object may include figures having various shapes and sizes.

According to an embodiment, the electronic device 201 may adjust the transparency of the second object.

Further, according to an embodiment, the electronic device 201 may determine a specific area around the area where the input to the first object is identified. The electronic device 201 may divide a specific area into a plurality of areas and display the second object by applying a plurality of colors to the inside of the plurality of divided areas. According to an embodiment, the electronic device 201 may determine the color of the second object based on the color extracted from the area where the input to the first object is identified. For example, the electronic device 201 may divide the area where the input to the first object is identified into a second area and a third area. The electronic device 201 may extract a first color among a plurality of colors included in the second area and extract a second color among a plurality of colors included in the third area. The electronic device 201 may apply the first color to the inside of the second area and apply the second color to the inside of the third area. According to an embodiment, the first color may be a color brighter than the second color, and the first color may be a color darker than the second color.

According to an embodiment, the electronic device 201 may display a second object including a plurality of concentric circles around the area where the input is identified. Each of the plurality of concentric circles may include the same or different shapes of outlines. According to an embodiment, the electronic device 201 may determine the color of the outline of each of the concentric circles based on the color extracted from the area where the input is identified. However, the second object may be implemented as another type of figure that shares the center point in addition to the circle. For example, the electronic device 201 may determine a second area and a third area around the area where the input is identified. The electronic device 201 may extract a first color among a plurality of colors included in the second area and extract a second color among a plurality of colors included in the third area. The electronic device 201 may apply the first color to the outline of the second area and apply the second color to the outline of the third area. According to an embodiment, the first color may have a larger brightness than the second color. According to an embodiment, the first color may have a smaller brightness than the second color.

According to an embodiment, in operation 317, while the second object is being displayed, the electronic device 201 may identify whether the first object is an object separable from the image. According to an embodiment, if the first object is identified as a separable object, the electronic device 201 may display a message indicating that the first object is separable from the image. According to an embodiment, if the first object is identified as a separable object, the electronic device 201 may identify (or extract) a first area corresponding to the first object from the image. For example, the first area may mean an area where the first object is displayed in the image. According to an embodiment, the electronic device 201 may stop displaying the second object based on the first object being identified as a separable object (or the first object being identified as an inseparable object). According to an embodiment, if the first object is identified as an inseparable object from the image, the electronic device 201 may display information indicating that the first object is an inseparable object on the display 260. According to an embodiment, when the electronic device 201 fails to identify (or extract) the first area corresponding to the first object within a preset time, the processor 220 may display information indicating that the first object is an inseparable object on the display 260. For example, the preset time may be set by the user or the electronic device 201. According to an embodiment, in operation 319, the electronic device 201 may apply a visual effect to the image so that the first object is distinguished from the image. According to an embodiment, the electronic device 201 may apply a visual effect to the first area corresponding to the first object or apply a visual effect to an area other than the first area. For example, the electronic device 201 may darkly display the area other than the first area. The electronic device 201 may apply a blur effect to the area other than the first area. The electronic device 201 may display the first area brighter than the first area.

According to an embodiment, in operation 321, the electronic device 201 may display a menu for executing a plurality of functions for the first object on the display 260. For example, the plurality of functions may include a function of storing, copying, or sharing the first image corresponding to the first object. According to an embodiment, if the user's input (e.g., tab input) to the area other than the area corresponding to the menu for executing the plurality of functions is identified, the electronic device 201 may not display the menu for executing the plurality of functions. According to an embodiment, if the user's input (e.g., tab input) is identified, the electronic device 201 may display an image to which a visual effect is not applied.

According to an embodiment, if an input to the menu for storing the first image included in the menu is identified after the menu is displayed, the electronic device 201 may store the first image in the memory 230 (e.g., the memory 230 of FIG. 2B). According to an embodiment, the electronic device 201 may include information about the image in the first image and store the first image in the memory 230. For example, when the electronic device 201 stores the image on an Internet website, information about the image may include uniform resource locator (URL) information.

According to an embodiment, if an input to the menu for copying the first image is identified, the electronic device 201 may copy the first image to the clipboard.

According to an embodiment, if an input to the menu for sharing the first image is identified, the electronic device 201 may transmit the first image to an external electronic device through the communication module 290 (e.g., the communication module 290 of FIG. 2B).

According to an embodiment, if the user's input to the area other than the menu for executing the plurality of functions is identified, the electronic device 201 may display the image without separating the first object from the image.

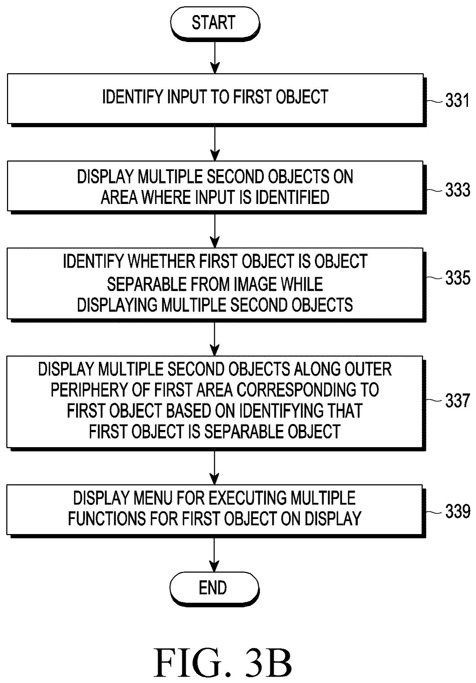

FIG. 3B is a flowchart illustrating an operation for an electronic device to display a plurality of second objects on an area where a user's input is identified according to an embodiment.

Referring to FIG. 3B, according to an embodiment, in operation 331, the electronic device 201 (e.g., the electronic device 201 of FIG. 2B) may identify an input (e.g., a long-press input or a tap-and-hold input) to the first object. In an embodiment, the first object may mean a subject or background included in the image.

According to an embodiment, in operation 333, the electronic device 201 may display a plurality of second objects on the area where the input to the first object is identified through the display 260 (e.g., the display 260 of FIG. 2B). According to an embodiment, if identifying an input to the first object, the electronic device 201 may display the plurality of second objects on the area where the input to the first object is identified. Alternatively, according to an embodiment, although the input to the first object is not released, the electronic device 201 may display the plurality of second objects on the area where the input to the first object is identified, based on the input to the first object being identified.

According to an embodiment, the plurality of second objects may be objects different from the first object. According to an embodiment, colors of the plurality of second objects may be colors extracted from the image. For example, the plurality of second objects may be displayed at a random position on an area where an input is identified at the time when the input to the first object is identified. According to an embodiment, colors of the plurality of second objects may be all different, some the same, or all the same.

According to an embodiment, in operation 335, while the plurality of second objects are being displayed, the electronic device 201 may identify whether the first object is an object separable from the image.

According to an embodiment, in operation 337, the electronic device 201 may align and display the plurality of second objects along the outer periphery of the first area corresponding to the first object based on identifying the first object as a separable object. For example, the first area may mean an area where the first object is displayed in the image. According to an embodiment, if the first object is identified as a separable object, the electronic device 201 may identify (or extract) a first area corresponding to the first object. According to an embodiment, if the first object is identified as an inseparable object, the electronic device 201 may display information indicating that the first object is inseparable.

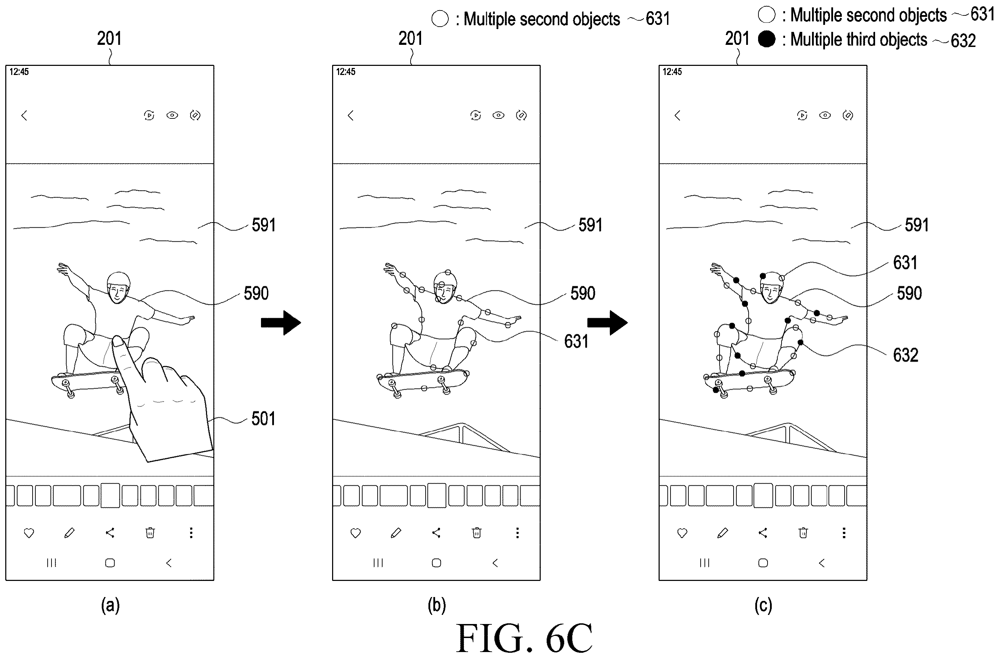

According to an embodiment, an operation for the electronic device 201 to align and display the plurality of second objects is described in detail in connection with FIG. 6C.

According to an embodiment, in operation 339, the electronic device 201 may display a menu for executing a plurality of functions for the first object on the display 260. For example, the plurality of functions may include a function of storing, copying, or sharing the first image corresponding to the first object.

Accordingly, according to an embodiment, the electronic device 201 may visually provide the user with information about whether the first object is an object separable from the image.

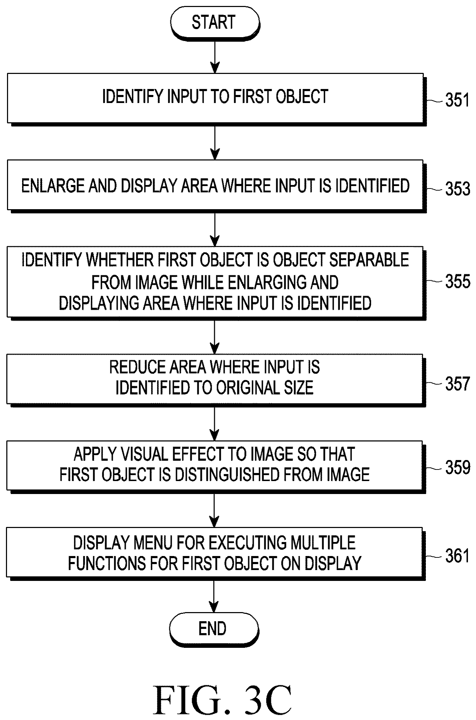

FIG. 3C is a flowchart illustrating an operation for an electronic device to enlarge and display an area where an input to a first object is identified according to a preset ratio according to an embodiment.

Referring to FIG. 3C, according to an embodiment, in operation 351, the electronic device 201 (e.g., the electronic device 201 of FIG. 2B) may identify an input (e.g., a long-press input or a tap-and-hold input) to a first object among at least one object included in an image disposed on the display (e.g., the display 260 of FIG. 2B). In an embodiment, the first object may mean a subject or background included in the image.

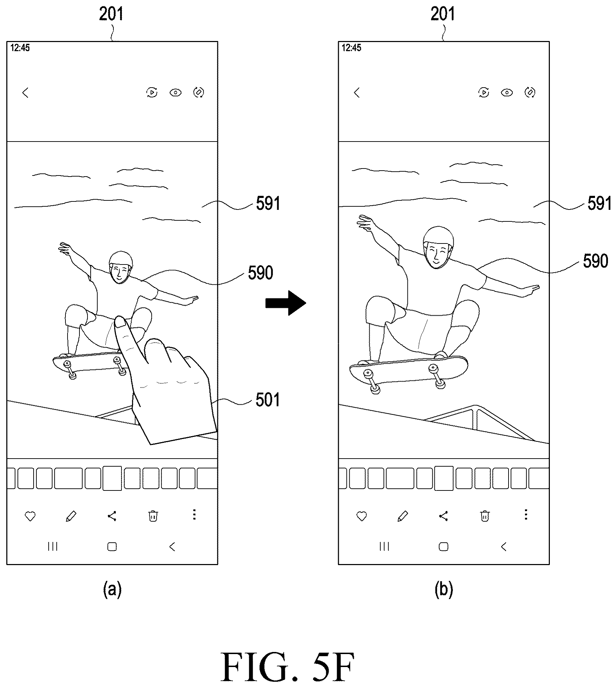

According to an embodiment, in operation 353, the electronic device 201 may enlarge and display the area where the input to the first object is identified at a preset ratio. According to an embodiment, if identifying that the input to the first object is released, the electronic device 201 may enlarge and display the area where the input to the first object is identified at a preset ratio. Alternatively, according to an embodiment, although the input to the first object is not released, the electronic device 201 may enlarge and display the area where the input to the first object is identified at a preset ratio, based on the input to the first object being identified. According to an embodiment, an operation for the electronic device 201 to enlarge and display an area where an input to a first object is identified according to a preset ratio is described in detail with reference to FIG. 5F.

According to an embodiment, in operation 355, the electronic device 201 may identify whether the first object is an object separable from the image while enlarging and displaying the area where the input to the first object is identified.

According to an embodiment, in operation 357, the electronic device 201 may reduce the area where the input to the first object is identified to an original size.

According to an embodiment, in operation 359, the electronic device 201 may apply a visual effect to the image so that the first object is distinguished from the image if the first object is identified as an object separable from the image. According to an embodiment, based on identifying that the first object is an object separable from the image, the electronic device 201 may identify (or extract) a first area corresponding to the first object. According to an embodiment, the electronic device 201 may apply a visual effect to the image so that the first area and the area other than the first area are distinguished from each other.

According to an embodiment, in operation 361, the electronic device 201 may display a menu for executing a plurality of functions for the first object on the display 260.

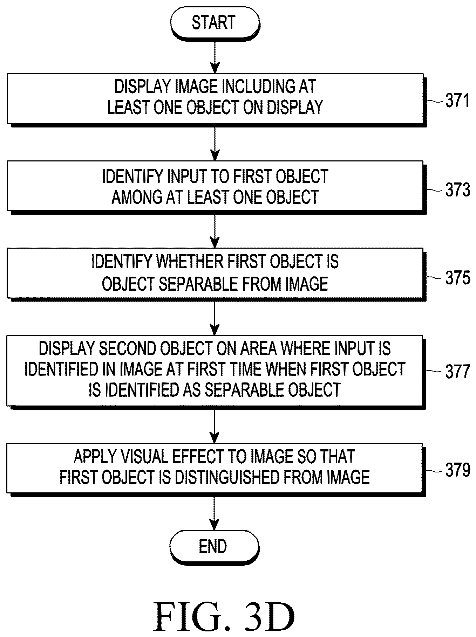

FIG. 3D is a flowchart illustrating an operation for an electronic device to separate at least one object included in an image according to an embodiment.

Referring to FIG. 3D, according to an embodiment, in operation 371, the electronic device 201 (e.g., the electronic device 201 of FIG. 2B) may display an image including at least one object on the display 260 (e.g., the display 260 of FIG. 2B). For example, at least one object may mean a subject or a background.

According to an embodiment, in operation 373, the electronic device 201 may identify an input to a first object among at least one object. For example, the input may include at least one of a touch input, a long-press input, a tap-and-hold input, a tap input, or a drag-and-drop input.

According to an embodiment, in operation 375, the electronic device 201 may identify whether the first object is an object separable from the image.

According to an embodiment, in operation 377, the electronic device 201 may display a second object on the area where the input is identified in the image at the first time when the first object is identified as a separable object. According to an embodiment, the electronic device 201 may identify (or extract) a first area corresponding to the first object from the image. For example, the first area may mean an area where the first object is displayed in the image. According to an embodiment, the electronic device 201 may stop displaying the second object based on identifying (or extracting) the first area. According to an embodiment, the electronic device 201 may stop displaying the second object, a preset time after the time when the second object is displayed.

According to an embodiment, in operation 379, the electronic device 201 may apply a visual effect to the image so that the first object is distinguished from the image. According to an embodiment, the electronic device 201 may apply a visual effect to the first area corresponding to the first object or apply a visual effect to an area other than the first area. For example, the electronic device 201 may darkly display the area other than the first area. The electronic device 201 may apply a blur effect to the area other than the first area. The electronic device 201 may display the first area brighter than the first area.

According to an embodiment, in operation 381, the electronic device 201 may display a menu for executing a plurality of functions for the first object on the display 260. For example, the plurality of functions may include a function of storing, copying, or sharing the first image corresponding to the first object. According to an embodiment, if the user's input (e.g., tab input) to the area other than the area corresponding to the menu for executing the plurality of functions is identified, the electronic device 201 may not display the menu for executing the plurality of functions. According to an embodiment, if the user's input (e.g., tab input) is identified, the electronic device 201 may display an image to which a visual effect is not applied.

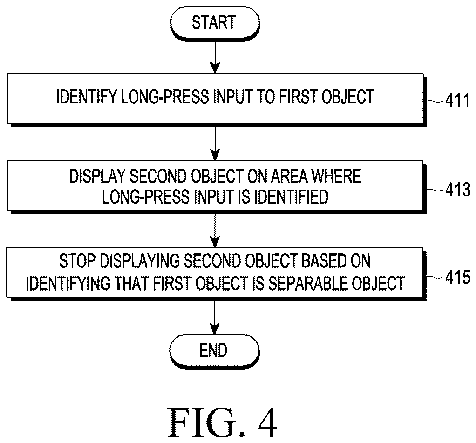

FIG. 4 is a flowchart illustrating an operation for an electronic device to display a second object until a time when a first object is identified as a separable object according to an embodiment.

Referring to FIG. 4, according to an embodiment, in operation 411, the electronic device 201 (e.g., the electronic device 201 of FIG. 2B) may identify a long-press input (or a tap-and-hold input) to a first object among at least one object included in an image disposed on the display (e.g., the display 260 of FIG. 2B). For example, the input for separating the first object may be implemented as a long-press input or a tap-and-hold input. For example, the electronic device 201 may identify a long-press input or a tap-and-hold input through the display 260.

According to an embodiment, in operation 413, the electronic device 201 may display the second object on an area where a long-press input (or tap-and-hold input) is identified through the display 260. For example, the second object may be displayed in the area where the long-press input is identified or the area where the tap-and-hold input is identified. According to an embodiment, the second object may be an object indicating that the long-press input (or tap-and-hold input) is identified. For example, the second object may be an object different from the first object. Further, the second object may be an object that is not related to at least one object included in the image displayed on the display 260.

According to an embodiment, if release of the long-press input (or tap-and-hold input) is identified, the electronic device 201 may display the second object on the area where the long-press input (or tap-and-hold input) is identified. Alternatively, according to an embodiment, the electronic device 201 may display the second object when the long-press input (or tap-and-hold input) is identified even when the long-press input (or tap-and-hold input) is not released.

For example, the second object may include a circular figure. However, the shape of the figure is not limited thereto, and the second object may include various types of figures.

According to an embodiment, in operation 415, the electronic device 201 may stop displaying the second object based on identifying the first object as a separable object. For example, the electronic device 201 may display the second object from the first time when the release of the long-press input (or tap-and-hold input) is identified to the second time when the first object is identified as a separable object or for at least a partial time between the first time when the release of the long-press input (or tap-and-hold input) is identified and the second time when the first object is identified as a separable object. Alternatively, the electronic device 201 may display the second object from the first time when the long-press input (or tap-and-hold input) is identified to the second time when the first object is identified as a separable object or for at least a partial time between the first time when the long-press input (or tap-and-hold input) is identified and the second time when the first object is identified as a separable object. According to an embodiment, the electronic device 201 may input the image to an artificial intelligence model to identify whether the first object is a separable object. According to an embodiment, the electronic device 201 may generate an artificial intelligence model by performing machine learning based on training data. According to an embodiment, machine learning may be performed through a separate server. Alternatively, the electronic device 201 may be implemented as an on-device artificial intelligence (AI) device. For example, technical features of the present invention may be applied to on-device artificial intelligence (AI) devices.

According to an embodiment, when the first object is identified as an inseparable object, the electronic device 201 may stop displaying the second object. In this case, the electronic device 201 may display a message indicating that the first object is inseparable from the image. For example, the electronic device 201 may display the second object from the first time when the release of the long-press input (or tap-and-hold input) is identified to the second time when the first object is identified as an inseparable object. Alternatively, the electronic device 201 may display the second object from the first time when the long-press input (or tap-and-hold input) is identified to the second time when the first object is identified as an inseparable object.

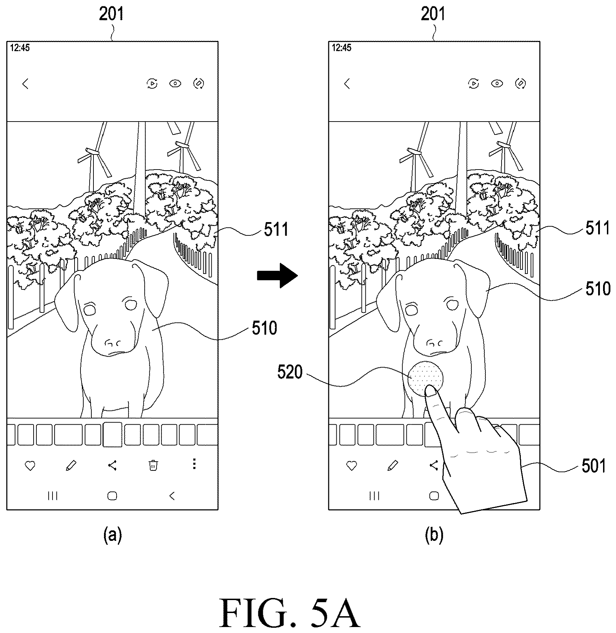

FIG. 5A is a view illustrating an operation for an electronic device to display a second object on an area where a user's input is identified according to an embodiment.

Referring to FIG. 5A(a), according to an embodiment, the electronic device 201 (e.g., the electronic device 201 of FIG. 2B) may display an image through the display 260 (e.g., the display 260 of FIG. 2B). According to an embodiment, the image may include a first area corresponding to a first object 510 and an area 511 except for the first area.

Referring to FIG. 5A(b), according to an embodiment, the electronic device 201 may identify the user's input 501 (e.g., a long-press input or a tap-and-hold input) to the first object 510 included in the image.

According to an embodiment, the electronic device 201 may display the second object 520 on the area where the user's input 501 to the first object 510 is identified even when the user's input 501 to the first object 510 (e.g., a long-press input or a tap-and-hold input) is not released. For example, the second object 520 may include a circular figure.

According to an embodiment, while the second object 520 is being displayed, the electronic device 201 may identify whether the first object 510 is an object separable from the image. The electronic device 201 may display the second object 520 until it is identified whether the first object 510 is an object separable from the image. According to an embodiment, the electronic device 201 may display the second object 520 from the first time when the user's input 501 (e.g., a long-press input or a tap-and-hold input) to the first object 510 is identified to the second time when the first object 510 is identified as a separable object.

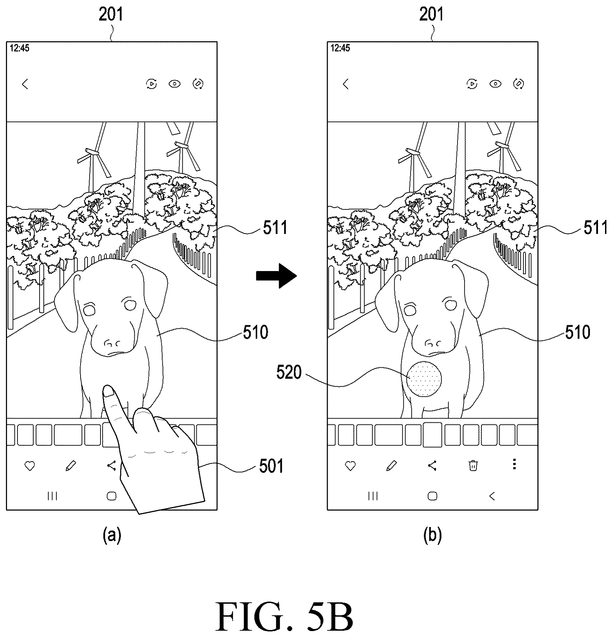

FIG. 5B is a view illustrating an operation for an electronic device to display a second object on an area where a user's input is identified according to an embodiment.

Referring to FIG. 5B(a), according to an embodiment, the electronic device 201 (e.g., the electronic device 201 of FIG. 2B) may display an image through the display 260 (e.g., the display 260 of FIG. 2B). According to an embodiment, the image may include a first area corresponding to a first object 510 and an area 511 except for the first area.

According to an embodiment, the electronic device 201 may identify the user's input 501 (e.g., a long-press input or a tap-and-hold input) to the first object 510 included in the image.

Referring to FIG. 5B(b), according to an embodiment, the electronic device 201 may display the second object 520 on the area where the user's input 501 to the first object 510 is identified based on identifying the release of the user's input 501 to the first object 510 (e.g., a long-press input or a tap-and-hold input). For example, the second object 520 may include a circular figure.

According to an embodiment, while the second object 520 is being displayed, the electronic device 201 may identify whether the first object 510 is an object separable from the image. The electronic device 201 may display the second object 520 until it is identified whether the first object 510 is an object separable from the image. The electronic device 201 may display the second object 520 from the first time when the release of the user's input 501 (e.g., a long-press input or a tap-and-hold input) to the first object 510 is identified to the second time when the first object 510 is identified as a separable object.

FIG. 5C is a view illustrating an operation for an electronic device to adjust the transparency of a second object according to an embodiment.

Referring to FIG. 5C(a), according to an embodiment, the electronic device 201 (e.g., the electronic device 201 of FIG. 2B) may display an image through the display 260 (e.g., the display 260 of FIG. 2B). According to an embodiment, the image may include a first area corresponding to a first object 210 and an area 211 except for the first area.

According to an embodiment, the electronic device 201 may identify the user's input 501 (e.g., a long-press input or a tap-and-hold input) to the first object 210 included in the image.

Referring to FIG. 5C(b), according to an embodiment, the electronic device 201 may display the second object 540 on the area where the user's input 501 to the first object 210 is identified based on identifying the release of the user's input 501 to the first object 210 (e.g., a long-press input or a tap-and-hold input). Further, according to an embodiment, the electronic device 201 may display the second object 540 on the area where the user's input 501 is identified based on identifying the user's input 501 to the first object 210.

According to an embodiment, the electronic device 201 may adjust the transparency of the second object 540. For example, the electronic device 201 may adjust the transparency of the second object 540 to be lower or higher than that of the area other than the area corresponding to the second object 540.

According to an embodiment, while the second object 540 is being displayed, the electronic device 201 may identify whether the first object 210 is an object separable from the image. The electronic device 201 may display the second object 540 until it is identified whether the first object 210 is an object separable from the image.

FIG. 5D is a view illustrating an operation for an electronic device to display a second object including a plurality of outlines according to an embodiment.

Referring to FIG. 5D(a), according to an embodiment, the electronic device 201 (e.g., the electronic device 201 of FIG. 2B) may display an image through the display 260 (e.g., the display 260 of FIG. 2B). According to an embodiment, the image may include a first area corresponding to a first object 550 and an area 560 except for the first area.

According to an embodiment, the electronic device 201 may identify the user's input 501 (e.g., a long-press input or a tap-and-hold input) to the first object 550 included in the image.

Referring to FIG. 5D(b), according to an embodiment, the electronic device 201 may display the second object 570 on the area where the user's input 501 is identified based on identifying the release of the user's input 501 to the first object 550 (e.g., a long-press input or a tap-and-hold input) or based on the user's input 501 to the first object 550 being identified. The electronic device 201 may display the second object 570 until it is identified whether the first object 550 is an object separable from the image.

According to an embodiment, the electronic device 201 may display a second object 570 including a plurality of concentric circles around the area where the input to the first object 550 is identified. Each of the plurality of concentric circles may include the same or different shapes of outlines. According to an embodiment, the electronic device 201 may determine the color of the outline of each of the concentric circles based on the color extracted from the area where the input to the first object 550 is identified. However, the second object 570 may be implemented as another type of figure that shares the center point in addition to the circle. For example, the electronic device 201 may determine a second area, a third area, and a fourth area around the area where the input is identified. The electronic device 201 may extract a first color among a plurality of colors included in the second area, extract a second color among a plurality of colors included in the third area, and extract a third color among a plurality of colors included in the fourth area. The electronic device 201 may apply the first color to the outline 571 of the second area, apply the second color to the outline 572 of the third area, and apply the third color to the outline 573 of the fourth area. According to an embodiment, the brightness of the first color may be larger than those of the second color and the third color, and the brightness of the second color may be larger than that of the third color. According to an embodiment, the brightness of the first color may be smaller than those of the second color and the third color, and the brightness of the second color may be smaller than that of the third color. However, the brightness of the color is not limited thereto, and the color may be set to have various levels of brightness.

FIG. 5E is a view illustrating an operation for an electronic device to apply a plurality of colors to a second object according to an embodiment.

Referring to FIG. 5E(a), according to an embodiment, the electronic device 201 (e.g., the electronic device 201 of FIG. 2B) may display an image through the display 260 (e.g., the display 260 of FIG. 2B). According to an embodiment, the image may include a first area corresponding to a first object 550 and an area 560 except for the first area.

According to an embodiment, the electronic device 201 may identify the user's input 501 (e.g., a long-press input or a tap-and-hold input) to the first object 550 included in the image.

Referring to FIG. 5E(b), according to an embodiment, the electronic device 201 may display the second object 580 on the area where the user's input 501 to the first object 550 is identified based on identifying the release of the user's input 501 to the first object 550 (e.g., a long-press input or a tap-and-hold input) or based on the user's input 501 to the first object 550 being identified. The electronic device 201 may display the second object 580 until it is identified whether the first object 550 is an object separable from the image.

According to an embodiment, the electronic device 201 may determine a specific area around the area where the input is identified. The electronic device 201 may divide a specific area into a plurality of areas and display the second object 580 by applying a plurality of colors to the inside of the plurality of divided areas.

According to an embodiment, the electronic device 201 may determine the color of the second object 580 based on the color extracted from the area where the input to the first object 550 is identified. For example, the electronic device 201 may divide the area where the input to the first object 550 is identified into a second area 581, a third area 582, and a fourth area 583. The electronic device 201 may extract a first color among a plurality of colors included in the second area 581, extract a second color among a plurality of colors included in the third area 582, and extract a third color among a plurality of colors included in the fourth area 583. The electronic device 201 may apply the first color to the inside of the second area 581, apply the second color to the inside of the third area 582, and apply the third color to the inside of the fourth area 583. According to an embodiment, the brightness of the first color may be larger than those of the second color and the third color, and the brightness of the second color may be larger than that of the third color. According to an embodiment, the brightness of the first color may be smaller than those of the second color and the third color, and the brightness of the second color may be smaller than that of the third color. However, the brightness of the color is not limited thereto, and the color may be set to have various levels of brightness.

FIG. 5F is a view illustrating an operation for an electronic device to enlarge and display an area where an input to a first object is identified according to a preset magnification ratio according to an embodiment.

Referring to FIG. 5F(a), according to an embodiment, the electronic device 201 (e.g., the electronic device 201 of FIG. 2B) may display an image through the display 260 (e.g., the display 260 of FIG. 2B). According to an embodiment, the image may include a first area corresponding to a first object 590 and an area 591 except for the first area.

According to an embodiment, the electronic device 201 may identify the user's input 501 to the first object 590 included in the image.

Referring to FIG. 5F(b), according to an embodiment, the electronic device 201 may enlarge and display the area where the user's input 501 to the first object 590 is identified at a preset ration based on identifying the release of the user's input 501 to the first object 590 (e.g., a long-press input or a tap-and-hold input) or based on the user's input 501 to the first object 590 being identified.

According to an embodiment, the electronic device 201 may identify whether the first object 590 is an object separable from the image while enlarging and displaying the area where the user's input 501 to the first object 590 is identified.

According to an embodiment, the electronic device 201 may reduce the area where the user's input 501 is identified to the original size after identifying whether the first object 590 is an object separable from the image. The electronic device 201 may enlarge and display the first object 590 until it is identified whether the first object 590 is an object separable from the image.

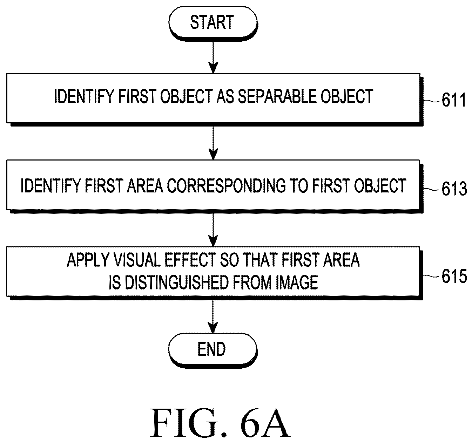

FIG. 6A is a flowchart illustrating an operation for an electronic device to apply a visual effect to an area except for a first area corresponding to a first object after display of a second object is stopped according to an embodiment.

Referring to FIG. 6A, according to an embodiment, in operation 611, the electronic device 201 (e.g., the electronic device 201 of FIG. 2B) may identify the first object included in the image as a separable object. According to an embodiment, the electronic device 201 may identify whether the first object is an object separable from the image based on identifying the user's long-press input (or tap-and-hold input) to the first object. For example, the electronic device 201 may display the second object on the image from the first time when the long-press input (or tap-and-hold input) is identified to the second time when the first object is identified as a separable object. In this case, the position where the second object is displayed may be determined based on the position identified at the long-press input (or tap-and-hold input).

According to an embodiment, in operation 613, the electronic device 201 may identify (or extract) a first area corresponding to the first object based on identifying the first object as a separable object. According to an embodiment, the electronic device 201 may input the image to an artificial intelligence model to identify whether the first object is a separable object. According to an embodiment, the electronic device 201 may generate an artificial intelligence model by performing machine learning based on training data. According to an embodiment, machine learning may be performed through a separate server. Further, the electronic device 201 may be implemented as an on-device artificial intelligence (AI) device.

According to an embodiment, in operation 615, the electronic device 201 may apply a visual effect to the image so that the first area is distinguished from the image. According to an embodiment, the electronic device 201 may apply a visual effect to the first area. Alternatively, according to an embodiment, the electronic device 201 may apply a visual effect to the area other than the first area. For example, according to an embodiment, the electronic device 201 may darkly display the area other than the first area. For example, according to an embodiment, the electronic device 201 may display the first area brighter than the area other than the first area. For example, according to an embodiment, the electronic device 201 may apply a blur effect to the area other than the first area. However, this is an example, the electronic device 201 of the present invention may apply a visual effect in various manners so that the first area and the area other than the first area are distinguished from each other.

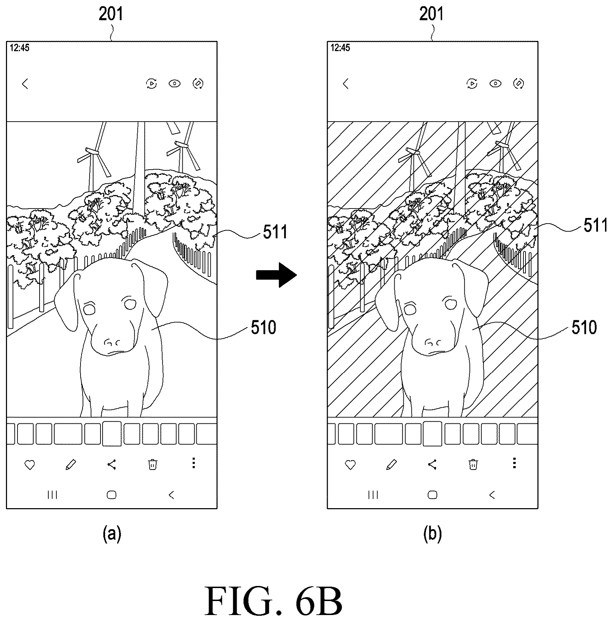

FIG. 6B is a view illustrating an operation for an electronic device to apply a visual effect to an area except for a first area corresponding to a first object after display of a second object is stopped according to an embodiment.

Referring to FIG. 6B(a), according to an embodiment, the electronic device 201 (e.g., the electronic device 201 of FIG. 2B) may identify that the first object 510 is an object separable from the image based on an input to the first object 510 included in the image. According to an embodiment, the electronic device 201 may stop displaying the second object based on identifying the first object 510 as an object separable from the image. For example, the second object may mean an object displayed on the area where the input to the first object 510 is identified.

According to an embodiment, the electronic device 201 may identify (or extract) a first area corresponding to the first object 510. For example, the first area may mean an area where the first object 510 is displayed in the image.

Referring to FIG. 6B(b), according to an embodiment, the electronic device 201 may apply a visual effect to the image so that the first object 510 is distinguished from the image. According to an embodiment, the electronic device 201 may apply a visual effect to the area 511 other than the first area.

According to an embodiment, the electronic device 201 may display the area 511 other than the first area to be darker than the first area (e.g., the area where the first object 510 is displayed). According to an embodiment, the electronic device 201 may apply a blur effect to the area 511 other than the first area. According to an embodiment, the electronic device 201 may display the first area brighter than the area 511 other than the first area. According to an embodiment, the electronic device 201 may not display the area 511 other than the first area.

FIG. 6C is a view illustrating an operation for an electronic device to align and display a plurality of third objects outside a first object to apply a visual effect to a first area corresponding to the first object according to an embodiment.

Referring to FIG. 6C(a), according to an embodiment, the electronic device 201 (e.g., the electronic device 201 of FIG. 2B) may display an image including a first object 590 through the display 260 (e.g., the display 260 of FIG. 2B). According to an embodiment, the image may include a first area corresponding to a first object 590 and an area 591 except for the first area.

According to an embodiment, the electronic device 201 may identify the user's input 501 (e.g., a long-press input or a tap-and-hold input) to the first object 590.

Referring to FIG. 6C(b), according to an embodiment, the electronic device 201 may display a plurality of second objects 631 on the area where the input to the first object 590 is identified. For example, the plurality of second objects 631 may be displayed at a random position on the area where the input to the first object 590 is identified.

According to an embodiment, while the plurality of second objects 631 is being displayed, the electronic device 201 may identify whether the first object 590 is an object separable from the image.

Referring to FIG. 6C(c), according to an embodiment, if the first object 590 is identified as a separable object, the electronic device 201 may identify (or extract) a first area corresponding to the first object 590.

According to an embodiment, the electronic device 201 may align and display the plurality of second objects 631 displayed at the random positions along the outer periphery of the first area corresponding to the first object 590.

According to an embodiment, the electronic device 201 may align and display a plurality of third objects 632 along the outer periphery of the first area. For example, the plurality of third objects 632 may have the same shape as or different shapes from the plurality of second objects 631. According to an embodiment, the plurality of third objects 632 may be displayed along the outer periphery of the first area so as not to overlap the plurality of second objects 631.

Accordingly, according to an embodiment, the electronic device 201 may separate and display the first area corresponding to the first object 590 separable from the image and the area 591 other than the first area.

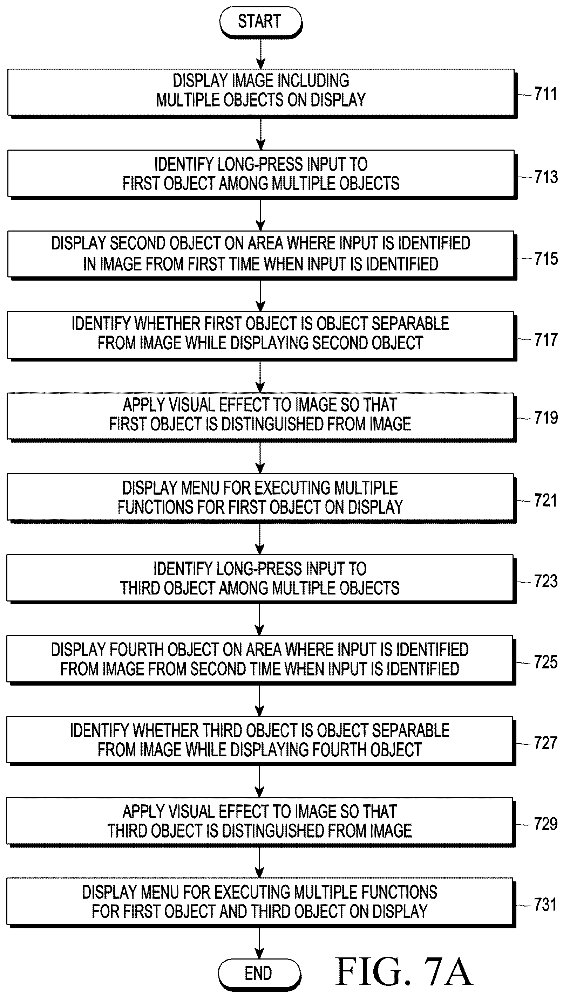

FIG. 7A is a flowchart illustrating an operation for an electronic device to separate a plurality of objects included in an image according to an embodiment.

Referring to FIG. 7A, according to an embodiment, in operation 711, the electronic device 201 (e.g., the electronic device 201 of FIG. 2B) may display an image including a plurality of objects on the display 260 (e.g., the display 260 of FIG. 2B). For example, the object may mean a subject or a background included in the image. For example, the image may include an image captured through the camera of the electronic device 201, an image stored in an Internet website, or an image received from an external electronic device.

According to an embodiment, in operation 713, the electronic device 201 may identify a long-press input (or tap-and-hold input) to the first object among the plurality of objects included in the image. For example, the first object may be a subject included in the image.

According to an embodiment, in operation 715, the electronic device 201 may display a second object on the area where the long-press input (or tap-and-hold input) is identified in the image from a first time when the long-press input (or tap-and-hold input) to the first object is identified. According to an embodiment, the second object may be an object different from the first object. According to an embodiment, the electronic device 201 may display the second object on the display 260 based on identifying the release of the long-press input (or tap-and-hold input) to the first object. Alternatively, the electronic device 201 may display the second object on the display 260 based on identifying the long-press input (or tap-and-hold input) even when the long-press input (or tap-and-hold input) to the first object is not released.

According to an embodiment, in operation 717, while the second object is being displayed, the electronic device 201 may identify whether the first object is an object separable from the image. According to an embodiment, if the first object is identified as a separable object, the electronic device 201 may identify (or extract) a first area corresponding to the first object from the image. According to an embodiment, the electronic device 201 may stop displaying the second object based on identifying the first object as a separable object.

According to an embodiment, in operation 719, the electronic device 201 may apply a visual effect to the image so that the first object is distinguished from the image. According to an embodiment, the electronic device 201 may apply a visual effect to the first area corresponding to the first object or apply a visual effect to an area other than the first area.

According to an embodiment, in operation 721, the electronic device 201 may display a menu for executing a plurality of functions for the first object on the display 260. For example, the plurality of functions may include a function of storing, copying, or sharing the first image corresponding to the first object. According to an embodiment, if the user's tap input to the area other than the menu for executing the plurality of functions is identified, the electronic device 201 may not display the menu for executing the plurality of functions.

According to an embodiment, in operation 723, the electronic device 201 may identify a long-press input (or tap-and-hold input) to a third object among the plurality of objects included in the image. According to an embodiment, the third object may be an object different from the first object among the objects included in the image. The third object may be a subject included in the image.

According to an embodiment, in operation 725, the electronic device 201 may display a fourth object on the area where the long-press input (or tap-and-hold input) to the third object is identified in the image from a second time when the long-press input (or tap-and-hold input) to the third object is identified. According to an embodiment, the fourth object may be an object different from the third object. According to an embodiment, the fourth object may be the same object as or a different object from the second object. According to an embodiment, the electronic device 201 may display the fourth object on the display 260 based on identifying the release of the input to the third object. Alternatively, even when the input to the third object is not released, the electronic device 201 may display the fourth object on the display 260 based on identifying the input to the third object. According to an embodiment, the electronic device 201 may display the fourth object on the area where the long-press input (or tap-and-hold input) to the third object is identified in a state in which a visual effect is applied to the image so that the first object is distinguished.

According to an embodiment, in operation 727, while the fourth object is being displayed, the electronic device 201 may identify whether the third object is an object separable from the image. According to an embodiment, if the third object is identified as an inseparable object, the electronic device 201 may not display the menu for executing the plurality of functions for the third object.

According to an embodiment, in operation 729, if the third object is identified as an object separable from the image, the electronic device 201 may apply a visual effect to the image so that the third object is distinguished from the image. According to an embodiment, the electronic device 201 may identify (or extract) the second area corresponding to the third object. For example, the second area may be an area where the third object is displayed. According to an embodiment, the electronic device 201 may apply a visual effect to the second area or apply a visual effect to the area other than the second area while applying a visual effect to the first area corresponding to the first object or applying a visual effect to the area other than the first area. For example, the electronic device 201 may darkly display the area other than the first area and the area other than the second area. According to an embodiment, the electronic device 201 may display the first area and the second area brighter than the area other than the first area and the area other than the second area.

According to an embodiment, in operation 731, the electronic device 201 may display the menu for executing the plurality of functions for the first object and the third object on the display 260. For example, the plurality of functions may include a function of storing, copying, or sharing a second image corresponding to the first object and the third object. According to an embodiment, if the user's input to the menu for executing the plurality of functions is identified, the electronic device 201 may execute the plurality of functions. According to an embodiment, if the user's input to the area other than the menu for executing the plurality of functions is identified, the electronic device 201 may display the image without separating the first object and the third object from the image.

According to an embodiment, the electronic device 201 may sequentially perform the above-described operations, the order of the operations may be changed, and the operations may be performed in parallel.

Further, according to an embodiment, the electronic device 201 may display the second object on the area where the input is identified at the time when at least one object is identified as an object separable from the image, rather than the time when the long-press input (or tap-and-hold input) to at least one object included in the image is identified. According to an embodiment, the electronic device 201 may display the second object on the display 260 on the area where the input is identified in the image at the time when the first object is identified as an object separable from the image. According to an embodiment, the electronic device 201 may identify (or extract) a first area corresponding to the first object from the image. According to an embodiment, the electronic device 201 may stop displaying the second object based on identifying (or extracting) the first area. According to an embodiment, the electronic device 201 may stop displaying the second object, a preset time after the time when the second object is displayed. According to an embodiment, the electronic device 201 may display the fourth object on the display 260 on the area where the input is identified in the image at the time when the third object is identified as an object separable from the image. According to an embodiment, the electronic device 201 may identify (or extract) a second area corresponding to the third object from the image. According to an embodiment, the electronic device 201 may stop displaying the fourth object based on identifying (or extracting) the second area. According to an embodiment, the electronic device 201 may stop displaying the fourth object, a preset time after the time when the fourth object is displayed.

Further, according to an embodiment, the electronic device 201 may identify whether at least one object included in the image is separable from the image in a background state. According to an embodiment, if it is identified that the first object is separable in the background state, the electronic device 201 may identify (or extract) the first area corresponding to the first object. According to an embodiment, if the third object is identified as separable in the background state, the electronic device 201 may identify (or extract) a second area corresponding to the third object. According to an embodiment, if the user's input to the first object is identified, the electronic device 201 may apply a visual effect to the first area without displaying the second object, or may apply a visual effect to the area other than the first area. According to an embodiment, if the user's input to the third object is identified, the electronic device 201 may apply a visual effect to the second area without displaying the fourth object, or may apply a visual effect to the area other than the second area. According to an embodiment, if the user's input to the first object and the third object is identified, the electronic device 201 may apply a visual effect to the first area and the second area without displaying the second object and the fourth object, or may apply a visual effect to the area other than the first area and the second area.

Thus, according to an embodiment, the electronic device 201 may separate a plurality of objects from the image and execute the plurality of functions for areas corresponding to the plurality of objects.

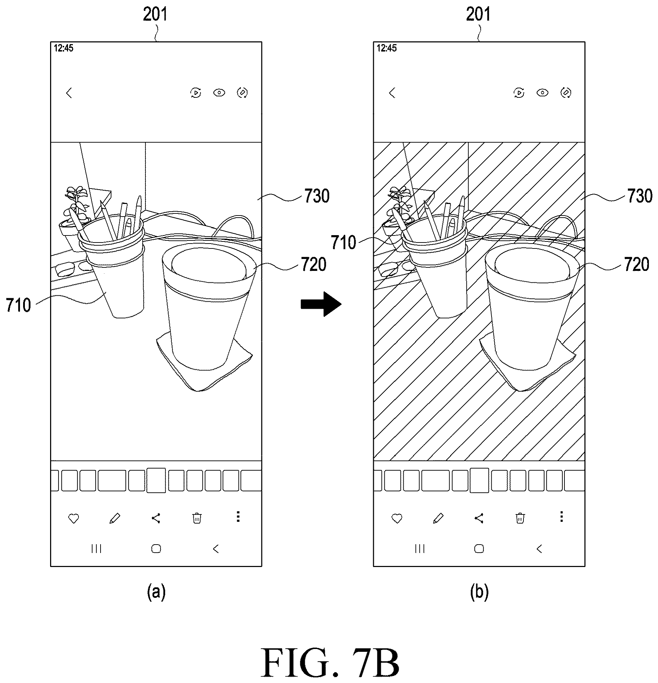

FIG. 7B is a view illustrating an operation for an electronic device to separate a first object and a third object from an image when a user input to a plurality of objects is identified according to an embodiment.

Referring to FIG. 7B(a), according to an embodiment, the electronic device 201 (e.g., the electronic device 201 of FIG. 2B) may display an image including a first object 710, a third object 720, and an area 730 other than the areas corresponding to the first object 710 and the third object 720 on the display 260 (e.g., the display 260 of FIG. 2B).

Referring to FIG. 7B(b), according to an embodiment, the electronic device 201 may identify the user's long-press input (or tap-and-hold input) to the first object 710. According to an embodiment, the electronic device 201 may display a second object (not shown) on the area where the long-press input (or tap-and-hold input) to the first object 710 is identified.

According to an embodiment, the electronic device 201 may identify that the first object 710 is an object separable from the image.

According to an embodiment, the electronic device 201 may apply a visual effect to the image so that the first object 710 is distinguished from the image. For example, the electronic device 201 may darkly display the areas 720 and 730 other than the first area corresponding to the first object 710.

According to an embodiment, the electronic device 201 may identify the user's long-press input (or tap-and-hold input) to the third object 720.

According to an embodiment, the electronic device 201 may display a fourth object (not shown) on the area where the long-press input to the third object 720 is identified while darkly displaying the area other than the first area corresponding to the first object 710. According to an embodiment, the electronic device 201 may identify that the third object 720 is an object separable from the image.

According to an embodiment, the electronic device 201 may apply a visual effect to the image so that the third object 720 is distinguished from the image. For example, the electronic device 201 may darkly display the area 730 other than the first area and the second area corresponding to the third object 720.

Alternatively, according to an embodiment, the electronic device 201 may display the second object (not shown) on the display 260 on the area where the input is identified in the image at the time when the first object 710 is identified as an object separable from the image. According to an embodiment, the electronic device 201 may identify (or extract) a first area corresponding to the first object 710 from the image. According to an embodiment, the electronic device 201 may stop displaying the second object (not shown) based on identifying (or extracting) the first area. According to an embodiment, the electronic device 201 may display the fourth object (not shown) on the display 260 on the area where the input is identified in the image at the time when the third object 720 is identified as an object separable from the image. According to an embodiment, the electronic device 201 may identify (or extract) a second area corresponding to the third object 720 from the image. According to an embodiment, the electronic device 201 may stop displaying the fourth object (not shown) based on identifying (or extracting) the second area.

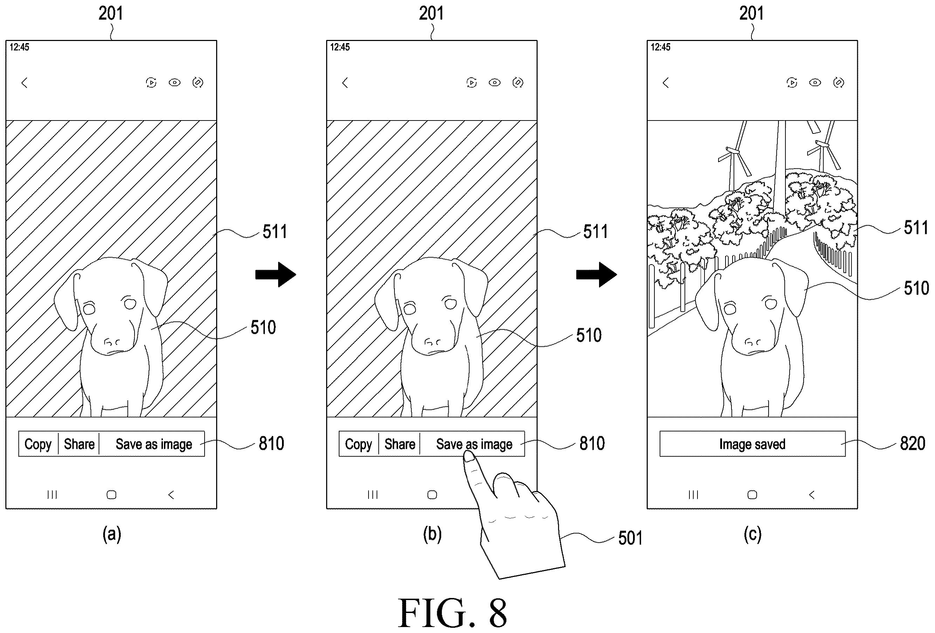

FIG. 8 is a view illustrating an operation for an electronic device to display a menu for displaying a plurality of functions for a first object according to an embodiment.

Referring to FIG. 8(a), according to an embodiment, the electronic device 201 (e.g., the electronic device 201 of FIG. 2B) may apply a visual effect to the area 511 other than the first area corresponding to the first object 510 based on identifying the first object 510 as an object separable from the image. According to an embodiment, the electronic device 201 may display the menu 810 for executing the plurality of functions for the first object 510 on the display 260 (e.g., the display 260 of FIG. 2B).

According to an embodiment, the plurality of functions may include a function of copying, sharing, or storing a first image corresponding to the first object 510 separated from the image.

According to an embodiment, if an input to the menu for copying the first image is identified, the electronic device 201 may copy the first image to the clipboard.

According to an embodiment, if an input to the menu for sharing the first image is identified, the electronic device 201 may share (or transmit) the first image with an external electronic device through the communication module 290.

According to an embodiment, if an input to the menu for storing the first image is identified, the electronic device 201 may store the first image in the memory 230 (e.g., the memory 230 of FIG. 2B).

Referring to FIG. 8(b), according to an embodiment, the electronic device 201 may identify the user's input 501 to the menu (e.g., storing as an image) for storing the first image included in the menu 810 for executing the plurality of functions after the menu 810 for executing the plurality of functions is displayed.

Referring to FIG. 8(c), according to an embodiment, the electronic device 201 may store the first image based on identifying the user's input 501 to the menu (e.g., storing as an image) for storing the first image.

According to an embodiment, the electronic device 201 may store information about the image as metadata for the first image. According to an embodiment, the electronic device 201 may include information about the image in the first image and store the first image in the electronic device 201. For example, when the image is stored on a website, information about the image may include URL information. The information about the image may include storage position information where the image is stored in the electronic device 201. According to an embodiment, when the first image is stored, the electronic device 201 may display an object 820 (e.g., "Image saved") indicating information indicating that the image is stored on the display 260.

According to an embodiment, the electronic device 201 may display the image (e.g., the original image of the first image) when displaying the object 820 indicating information indicating that the image is stored on the display 260.

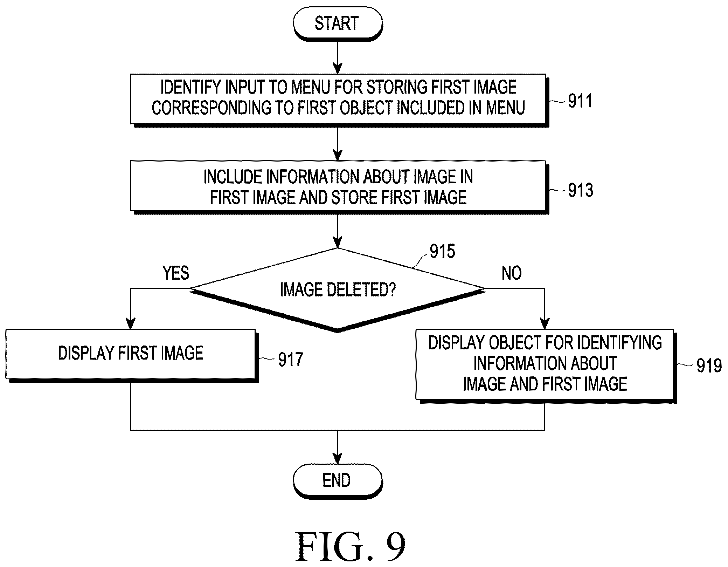

FIG. 9 is a flowchart illustrating an operation for an electronic device to determine whether to display an object for identifying information about an image depending on whether the image is deleted according to an embodiment.

Referring to FIG. 9, according to an embodiment, in operation 911, the electronic device 201 (e.g., the electronic device 201 of FIG. 2B) may identify an input to the menu for storing a first image corresponding to the first object included in the menu for executing the plurality of functions for the first object.

According to an embodiment, in operation 913, the electronic device 201 may store the first image by including information about the image in the first image. According to an embodiment, the information about the image may include storage position information where the image is stored in the electronic device 201. According to an embodiment, when the image is stored on a website, information about the image may include URL information. According to an embodiment, the electronic device 201 may store information about the image as metadata for the first image.

According to an embodiment, in operation 915, the electronic device 201 may determine whether the image has been deleted.

According to an embodiment, if it is identified that the image has not been deleted (operation 915-No), in operation 919, the electronic device 201 may display the first image and an object for identifying information about the image together. According to an embodiment, the electronic device 201 may display an object for identifying URL information. According to an embodiment, the electronic device 201 may display an object for identifying storage position information where the image is stored in the electronic device 201. According to an embodiment, the electronic device 201 may display an object for identifying the image (e.g., the original image of the first image).

According to an embodiment, if it is identified that the image has been deleted (operation 915-Yes), the electronic device 201 may display the first image in operation 917. According to an embodiment, if it is identified that the image has been deleted, the electronic device 201 may not display the object for identifying information about the image.

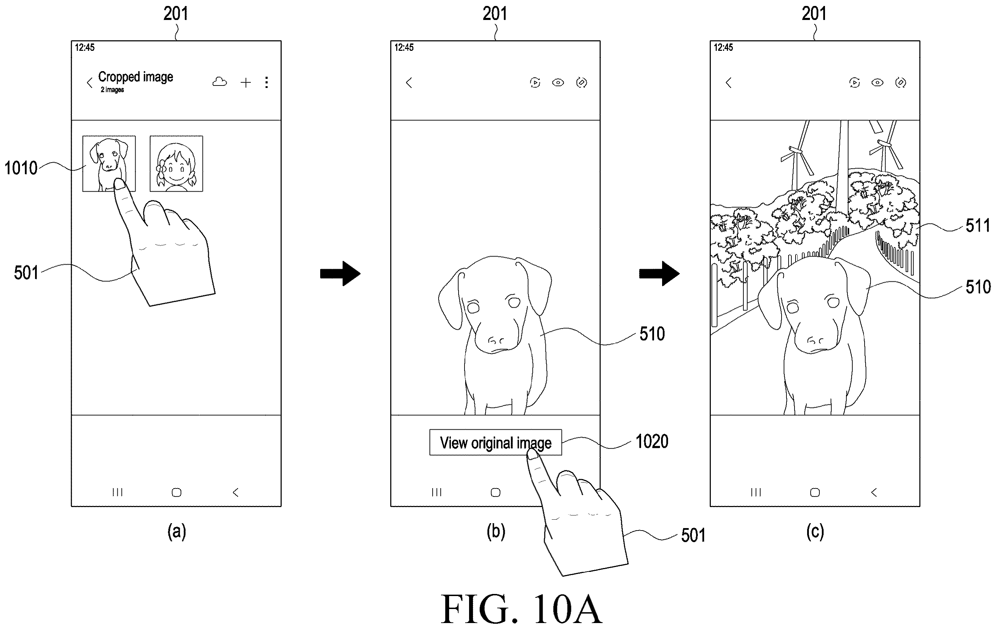

FIG. 10A is a view illustrating an operation for an electronic device to display an object for displaying an image according to an embodiment.

Referring to FIG. 10A(a), according to an embodiment, the electronic device 201 (e.g., the electronic device 201 of FIG. 2B) may execute an application related to a photo installed on the electronic device 201.

According to an embodiment, when a plurality of images are stored in the electronic device 201 through the display 260 (e.g., the display 260 of FIG. 2B), the electronic device 201 may display a plurality of objects for displaying the plurality of images. According to an embodiment, the plurality of images may mean images corresponding to an object separated from the image based on the user's input (e.g., a long-press input or a tap-and-hold input).

According to an embodiment, the electronic device 201 may identify the user's input 501 to the object 1010 for displaying the first image stored in the electronic device 201.

Referring to FIG. 10A(b), according to an embodiment, the electronic device 201 may display the first image based on identifying the user's input 501 to the object 1010 for displaying the first image. For example, the first image may mean an image corresponding to the first object 510 separated from the image (e.g., the original image of the first image).

According to an embodiment, the electronic device 201 may display an object 1020 (e.g., view the original image) for identifying the image (e.g., the original image of the first image). According to an embodiment, when the image is deleted, the electronic device 201 may not display an object 1020 (e.g., view the original image) for identifying the image (e.g., the original image of the first image).

According to an embodiment, the electronic device 201 may identify the user's input 501 to the object 1020 (e.g., view the original image) for identifying the image (e.g., the original image of the first image).

Referring to FIG. 10A(c), according to an embodiment, the electronic device 201 may display the image through the display 260 based on identifying the user's input 501 to the object 1020 (e.g., view the original image) for identifying the image (e.g., the original image of the first image). The image may mean an image including the first area corresponding to the first object 510 and the area 511 other than the first area.

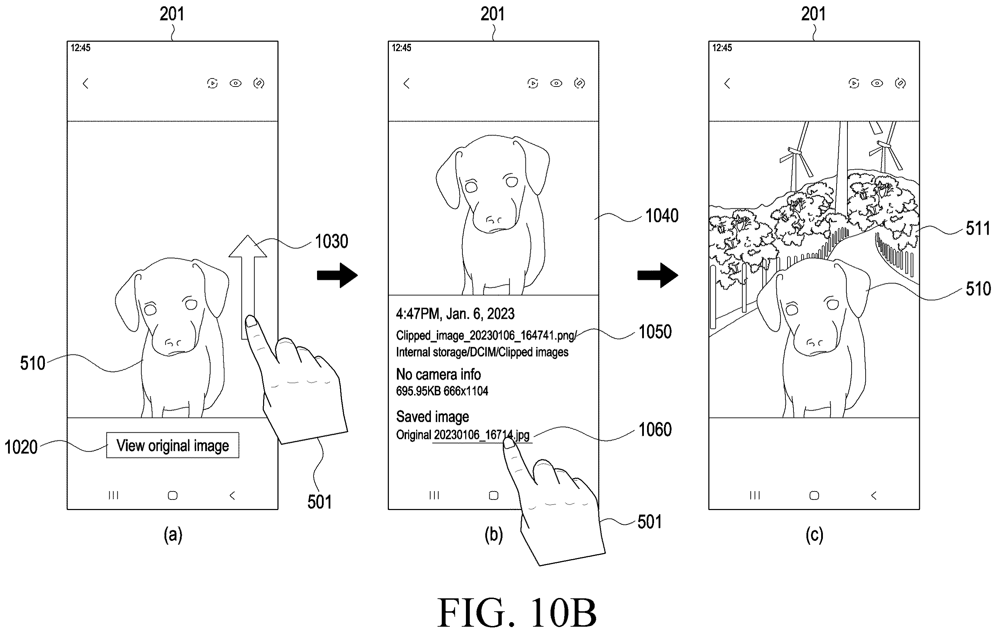

FIG. 10B is a view illustrating an operation for an electronic device to display information about an image according to an embodiment.

Referring to FIG. 10B(a), according to an embodiment, the electronic device 201 (e.g., the electronic device 201 of FIG. 2B) may identify the user's input 501 for displaying information about the image (e.g., the original image of the first image) and information about the first image on the display 260 (e.g., the display 260 of FIG. 2B). According to an embodiment, the user's input 501 for displaying the information about the image and the first image may mean a swipe input in the direction of the arrow 1030 (e.g., an upward direction).

Referring to FIG. 10B(b), according to an embodiment, the electronic device 201 may display the first image 1040, the information about the first image 1050, and the information about the image (e.g., the original image of the first image) based on identifying the user's input 501 for displaying the information about the image. According to an embodiment, the electronic device 201 may identify metadata for the first image 1040 stored in the electronic device 201, and display information 1050 about the first image and information 1060 about the image based on the identified metadata.

According to an embodiment, the information 1050 about the first image may include at least one of date information (e.g., January 6, 2023) and time information (e.g., 4:47 p.m.) when the image is stored, storage position information (e.g., Clipped_image_20230106_164741.png/internal storage/DCIM/Clipped images) about the first image, capacity information (e.g., 695.95KB) about the first image, or resolution information (e.g., 666x1104) about the first image. However, this is an example, and embodiments of the present invention may include various information.

According to an embodiment, the information 1060 about the image (e.g., the original image of the first image) may include information about the file name of the image (e.g., 20230106_16714). According to an embodiment, the information 1060 about the image may be displayed as an object for displaying the image. According to an embodiment, the electronic device 201 may identify the user's input 501 to the information 1060 about the image.

According to an embodiment, if it is identified that the image has been deleted, the electronic device 201 may not display information 1060 about the image.

Referring to FIG. 10B(c), according to an embodiment, if the user's input to the information 1060 about the image is identified, the electronic device 201 may display the image (e.g., the original image of the first image). According to an embodiment, the image may mean an image including the first area 510 corresponding to the first object and the area 511 other than the first area.

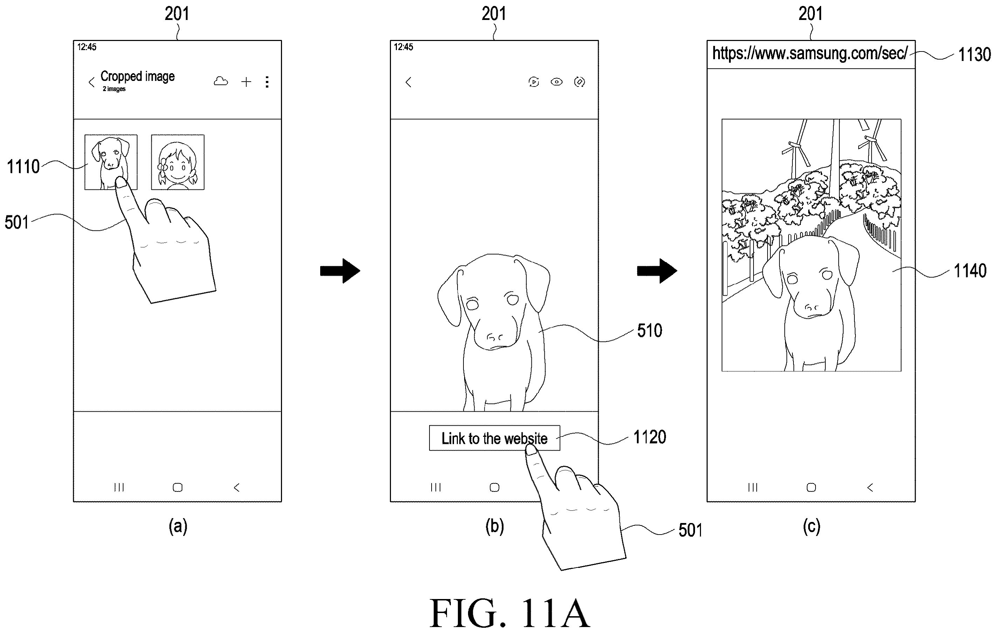

FIG. 11A is a view illustrating an operation for an electronic device to display an object for displaying an image according to an embodiment.

Referring to FIG. 11A(a), according to an embodiment, the electronic device 201 (e.g., the electronic device 201 of FIG. 2B) may execute an application related to a photo installed on the electronic device 201.

According to an embodiment, when a plurality of images are stored in the electronic device 201, the electronic device 201 may display a plurality of objects for displaying the plurality of images through the display 260 (e.g., the display 260 of FIG. 2B). According to an embodiment, the plurality of images may mean images corresponding to an object separated based on the user's input (e.g., a long-press input or a tap-and-hold input).

According to an embodiment, the electronic device 201 may identify the user's input 501 to the object 1110 for displaying the first image stored in the electronic device 201.

Referring to FIG. 11A(b), according to an embodiment, the electronic device 201 may display the first image based on identifying the user's input 501 to the object 1110 for displaying the first image. For example, the first image may mean an image corresponding to the first object 510 separated from the image (e.g., the original image of the first image). According to an embodiment, the image may be an image stored in a website.

According to an embodiment, the electronic device 201 may display an object 1120 (e.g., link to the website) to display the image (e.g., the original image of the first image) before separating the first image. According to an embodiment, when the image is deleted, the electronic device 201 may not display an object 1120 (e.g., link to the website) for displaying the image (e.g., the original image of the first image).

According to an embodiment, the electronic device 201 may identify the user's input 501 to the object 1120 (e.g., link to the website) to display the image (e.g., the original image of the first image).

Referring to FIG. 11A(c), according to an embodiment, the electronic device 201 may display the website address information 1130 and the website screen 1140 based on identifying the user's input 501 to the object 1120 (e.g., link to the website) to display the image (e.g., the original image of the first image).

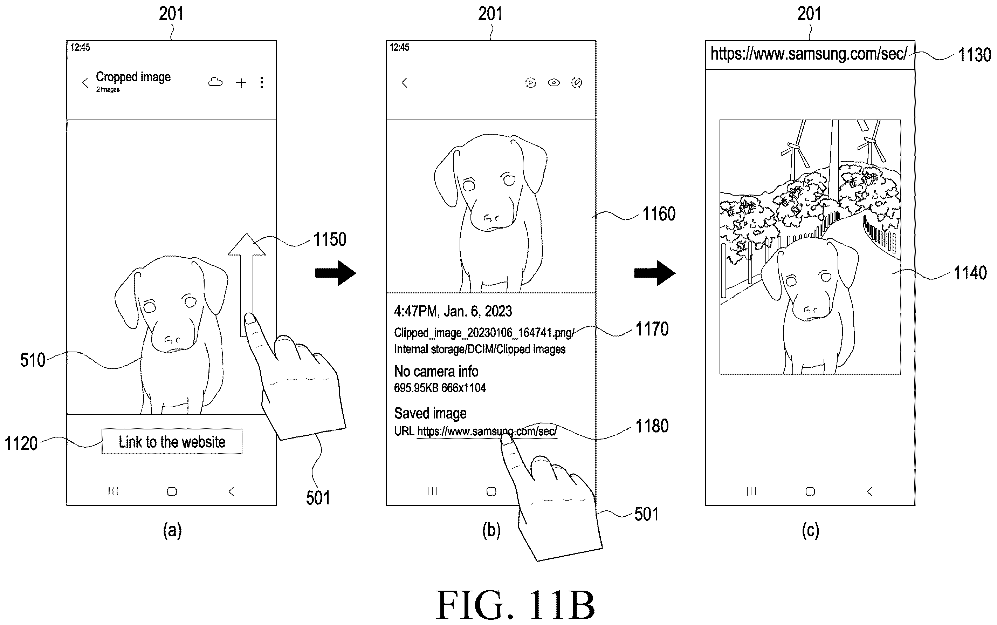

FIG. 11B is a view illustrating an operation for an electronic device to display information about an image according to an embodiment.

Referring to FIG. 11B(a), according to an embodiment, the electronic device 201 (e.g., the electronic device 201 of FIG. 2B) may identify the user's input 501 for displaying information about the image (e.g., the original image of the first image) and information about the first image on the display 260 (e.g., the display 260 of FIG. 2B). According to an embodiment, the user's input 501 for displaying the information about the image and the first image may mean a swipe input in the direction of the arrow 1150 (e.g., an upward direction).

Referring to FIG. 11B(b), according to an embodiment, the electronic device 201 may identify whether the image (e.g., the original image of the first image) is valid based on identifying the user's input 501 for displaying information about the image and information about the first image. According to an embodiment, if the image is identified corresponding to URL information about the image included in the metadata for the first image or storage position information about the image stored in the electronic device 201, the image (e.g., the original image of the first image) may be identified to be valid. For example, the electronic device 201 may identify whether the image has been deleted based on the storage position information about the image. When the image is deleted, the electronic device 201 may identify that the image is not valid. When the URL address is not valid, the electronic device 201 may identify that the image is not valid. For example, the electronic device 201 may identify whether the URL address has been deleted based on the URL information about the image. When the URL address has been deleted, the electronic device 201 may identify that the URL address is not valid. For example, the electronic device 201 may identify whether the image has been deleted from the website based on URL information about the image. When the image is deleted from the website, the electronic device 201 may identify that the image is not valid.

According to an embodiment, if it is identified that the image (e.g., the original image of the first image) is valid, the electronic device 201 may display the first image 1160, information 1170 about the first image, and information 1180 about the image (e.g., the original image of the first image). According to an embodiment, if it is identified that the image is invalid, the electronic device 201 may not display information 1180 about the image (e.g., the original image of the first image).

According to an embodiment, the information 1170 about the first image may include at least one of date information (e.g., January 6, 2023) and time information (e.g., 4:47 p.m.) when the image is stored, storage position information (e.g., Clipped_image_20230106_164741.png/internal storage/DCIM/Clipped images) about the first image, capacity information (e.g., 695.95KB) about the first image, or resolution information (e.g., 666x1104) about the first image. However, this is an example, and embodiments of the present invention may include various information.

According to an embodiment, the information 1170 about the image (e.g., the original image of the first image) may include information (e.g., http://www.samsung.com) about the URL of the image. According to an embodiment, the information 1180 about the image may be an object for displaying the screen of the website. According to an embodiment, the electronic device 201 may identify the user's input to the information 1180 about the image.

According to an embodiment, if it is identified that the image has been deleted, the electronic device 201 may not display information 1180 about the image.

Referring to FIG. 11B(c), according to an embodiment, the electronic device 201 may display the website address information 1130 and the website screen 1140 if the user's input to the information 1180 about the image is identified.

An electronic device according to an embodiment may comprise memory storing instructions, a display, and at least one processor.

In the electronic device according to an embodiment, the instructions may, when executed by the at least one processor, cause the electronic device to display an image including at least one object on the display.

In the electronic device according to an embodiment, the instructions may, when executed by the at least one processor, cause the electronic device to identify an input to a first object among the at least one object through the display.

In the electronic device according to an embodiment, the instructions may, when executed by the at least one processor, cause the electronic device to, based on identifying the input to the first object, display a second object on an area where the input is identified in the image from a first time when the input is identified.

In the electronic device according to an embodiment, the second object may be different from the at least one object included in the image.

In the electronic device according to an embodiment, the instructions may, when executed by the at least one processor, cause the electronic device to identify whether the first object is an object separable from the image while displaying the second object.

In the electronic device according to an embodiment, the instructions may, when executed by the at least one processor, cause the electronic device to apply a visual effect to the image so that the first object is distinguished from the image, based on identifying that the first object is a separable object.

In the electronic device according to an embodiment, the instructions may, when executed by the at least one processor, cause the electronic device to display a menu for executing a plurality of functions for the first object on the display.

In the electronic device according to an embodiment, the input to the first object may include a long-press input to the first object.

In the electronic device according to an embodiment, the instructions may, when executed by the at least one processor, cause the electronic device to display the second object on the display based on identifying that the long-press input is released.

In the electronic device according to an embodiment, the instructions may, when executed by the at least one processor, cause the electronic device to display the second object on the display based on the long-press input being identified even when the long-press input is not released.

In the electronic device according to an embodiment, the instructions may, when executed by the at least one processor, cause the electronic device to display the second object from the first time to a second time when the first object is identified as the separable object.

In the electronic device according to an embodiment, the instructions may, when executed by the at least one processor, cause the electronic device to identify a first area corresponding to the first object from the image based on identifying that the first object is the separable object.

In the electronic device according to an embodiment, the plurality of functions may include a function of copying, sharing, or storing a first image corresponding to the first object.

In the electronic device according to an embodiment, the instructions may, when executed by the at least one processor, cause the electronic device to, when identifying an input to a menu for storing the first image included in the menu after the menu is displayed, include information about the image in the first image and store the first image.

In the electronic device according to an embodiment, the instructions may, when executed by the at least one processor, cause the electronic device to , when the information about the image includes storage position information about the image, identify whether the image is deleted based on the storage position information.

In the electronic device according to an embodiment, the instructions may, when executed by the at least one processor, cause the electronic device to , when the image is not deleted, display the first image together with an object for identifying the information about the image.

In the electronic device according to an embodiment, the instructions may, when executed by the at least one processor, cause the electronic device to , when the information about the image includes uniform resource locator information, identify whether the image is deleted based on the URL information.

In the electronic device according to an embodiment, the instructions may, when executed by the at least one processor, cause the electronic device to, when the image is not deleted, display the URL information through the display.

In the electronic device according to an embodiment, the instructions may, when executed by the at least one processor, cause the electronic device to darken a remaining area except for the first object in the image as the visual effect.

A method for operating an electronic device according to an embodiment may comprise displaying an image including at least one object on a display included in the electronic device.

The method for operating the electronic device according to an embodiment may comprise, based on identifying the input to the first object, displaying a second object on an area where the input is identified in the image from a first time when the input is identified.

In the method for operating the electronic device according to an embodiment, the second object may be different from the at least one object included in the image.

The method for operating the electronic device according to an embodiment may comprise identifying whether the first object is an object separable from the image while displaying the second object.

The method for operating the electronic device according to an embodiment may comprise applying a visual effect to the image so that the first object is distinguished from the image, based on identifying that the first object is a separable object.

The method for operating the electronic device according to an embodiment may comprise displaying a menu for executing a plurality of functions for the first object on the display.

In the method for operating the electronic device according to an embodiment, the input to the first object may include a long-press input to the first object.

The method for operating the electronic device according to an embodiment may comprise displaying the second object on the display based on identifying that the long-press input is released.

The method for operating the electronic device according to an embodiment may comprise displaying the second object on the display based on the long-press input being identified even when the long-press input is not released.

The method for operating the electronic device according to an embodiment may comprise displaying the second object from the first time to a second time when the first object is identified as the separable object.

The method for operating the electronic device according to an embodiment may comprise identifying a first area corresponding to the first object from the image based on identifying that the first object is a separable object.

In the method for operating the electronic device according to an embodiment, the plurality of functions may include a function of copying, sharing, or storing a first image corresponding to the first object.

The method for operating the electronic device according to an embodiment may comprise, when identifying an input to a menu for storing the first image included in the menu after the menu is displayed, including information about the image in the first image and storing the first image.

The method for operating the electronic device according to an embodiment may comprise displaying the first image together with an object for identifying the information about the image.

The method for operating the electronic device according to an embodiment may comprise, when the information about the image includes uniform resource locator (URL) information, displaying the URL information through the display.

A non-transitory recording medium according to an embodiment may store at least one instruction capable of executing displaying an image including at least one object on a display included in an electronic device.

The non-transitory recording medium according to an embodiment may store at least one instruction capable of executing identifying an input to a first object among the at least one object through the display.

The non-transitory recording medium according to an embodiment may store at least one instruction capable of executing, based on identifying the input to the first object, displaying a second object on an area where the input is identified in the image from a first time when the input is identified.

In the non-transitory recording medium according to an embodiment, the second object may be different from the at least one object included in the image.

The non-transitory recording medium according to an embodiment may store at least one instruction capable of executing identifying whether the first object is an object separable from the image while displaying the second object.

The non-transitory recording medium according to an embodiment may store at least one instruction capable of executing applying a visual effect to the image so that the first object is distinguished from the image, based on identifying that the first object is a separable object.

The non-transitory recording medium according to an embodiment may store at least one instruction capable of executing displaying a menu for executing a plurality of functions for the first object on the display.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or 201). For example, a processor (e.g., the processor 120 or 220) of the machine (e.g., the electronic device 101 or 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 of FIG. 1; 201 of FIG. 2B), comprising:
memory for storing instructions (130 of FIG. 1; 230 of FIG. 2B);
a display (160 of FIG. 1; 260 of FIG. 2B); and
at least one processor (120 of FIG. 1; 220 of FIG. 2B), wherein the instructions, when executed by the at least one processor, cause the electronic device to:
display an image including at least one object on the display;
identify an input to a first object among the at least one object through the display;
based on identifying the input to the first object, display a second object on an area where the input is identified in the image from a first time when the input is identified, the second object being different from the at least one object included in the image;
identify whether the first object is an object separable from the image while displaying the second object;
apply a visual effect to the image so that the first object is distinguished from the image, based on identifying that the first object is a separable object; and
display a menu for executing a plurality of functions for the first object on the display.

2. The electronic device of claim 1, wherein the instructions, when executed by the at least one processor, cause the electronic device to:
wherein the input to the first object includes a long-press input to the first object,
display the second object on the display based on identifying that the long-press input is released.

3. The electronic device of any one of claim 1 to claim 2, wherein the instructions, when executed by the at least one processor, cause the electronic device to:
wherein the input to the first object includes a long-press input to the first object,
display the second object on the display based on the long-press input being identified even when the long-press input is not released.

4. The electronic device of any one of claim 1 to claim 3, wherein the instructions, when executed by the at least one processor, cause the electronic device to display the second object from the first time to a second time when the first object is identified as the separable object.

5. The electronic device of any one of claim 1 to claim 4, wherein the instructions, when executed by the at least one processor, cause the electronic device to identify a first area corresponding to the first object from the image based on identifying that the first object is the separable object.

6. The electronic device of any one of claim 1 to claim 5, wherein the plurality of functions include a function of copying, sharing, or storing a first image corresponding to the first object.

7. The electronic device of any one of claim 1 to claim 6, wherein the instructions, when executed by the at least one processor, cause the electronic device to, when identifying an input to a menu for storing the first image included in the menu after the menu is displayed, include information about the image in the first image and store the first image.

8. The electronic device of any one of claim 1 to claim 7, wherein the instructions, when executed by the at least one processor, cause the electronic device to:
when the information about the image includes storage position information about the image, identify whether the image is deleted based on the storage position information; and
when the image is not deleted, display the first image together with an object for identifying the information about the image.

9. The electronic device of any one of claim 1 to claim 8, wherein the instructions, when executed by the at least one processor, cause the electronic device to:
when the information about the image includes uniform resource locator (URL) information, identify whether the image is deleted based on the URL information; and
when the image is not deleted, display the URL information through the display.

10. The electronic device of any one of claim 1 to claim 9, wherein the instructions, when executed by the at least one processor, cause the electronic device to darken a remaining area except for the first object in the image as the visual effect.

11. A method for operating an electronic device (101 of FIG. 1; 201 of FIG. 2B), the method comprising:
displaying an image including at least one object on a display (160 of FIG. 1; 260 of FIG. 2B) included in the electronic device;
identifying an input to a first object among the at least one object through the display;
based on identifying the input to the first object, displaying a second object on an area where the input is identified in the image from a first time when the input is identified, the second object being different from the at least one object included in the image;
identifying whether the first object is an object separable from the image while displaying the second object;
applying a visual effect to the image so that the first object is distinguished from the image, based on identifying that the first object is a separable object; and
displaying a menu for executing a plurality of functions for the first object on the display.

12. The method of claim 11, wherein the input to the first object includes a long-press input to the first object, and
wherein displaying the second object includes displaying the second object on the display based on identifying that the long-press input is released.

13. The method of any one of claim 11 to claim 12, wherein the input to the first object includes a long-press input to the first object, and
wherein displaying the second object includes displaying the second object on the display based on the long-press input being identified even when the long-press input is not released.

14. The method of any one of claims 11 to 13, wherein displaying the second object includes displaying the second object from the first time to a second time when the first object is identified as the separable object.

15. A non-transitory recording medium storing at least one instruction capable of executing:
displaying an image including at least one object on a display (160 of FIG. 1; 260 of FIG. 2B) included in an electronic device (101 of FIG. 1; 201 of FIG. 2B);
identifying an input to a first object among the at least one object through the display;
based on identifying the input to the first object, displaying a second object on an area where the input is identified in the image from a first time when the input is identified, the second object being different from the at least one object included in the image;
identifying whether the first object is an object separable from the image while displaying the second object;
applying a visual effect to the image so that the first object is distinguished from the image, based on identifying that the first object is a separable object; and
displaying a menu for executing a plurality of functions for the first object on the display.
